(19) Europäisches Patentamt / European Patent Office / Office européen des brevets

(11) **EP 2 960 587 B1**

(12) **EUROPÄISCHE PATENTSCHRIFT**

(45) Veröffentlichungstag und Bekanntmachung des Hinweises auf die Patenterteilung:
**07.06.2023  Patentblatt 2023/23**

(21) Anmeldenummer: **14173714.8**

(22) Anmeldetag: **24.06.2014**

(51) Internationale Patentklassifikation (IPC):
**F24D 19/10** *(2006.01)*     **F04D 15/00** *(2006.01)*
**G05D 23/19** *(2006.01)*

(52) Gemeinsame Patentklassifikation (CPC):
**F24D 19/1006; F24D 19/1012; F24D 19/1015;**
Y02B 30/70

(54) **Verfahren zum Begrenzen des Versorgungsstromes in einem Wärmeübertragungssystem**

Method for limiting the supply flow rate in a heat transfer system

Procédé de limitation du débit d'alimentation dans un système de transmission de chaleur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2015  Patentblatt 2015/53**

(73) Patentinhaber: **Grundfos Holding A/S**
**8850 Bjerringbro (DK)**

(72) Erfinder:
• **Nielsen, Brian Kongsgaard**
 **8800 Viborg (DK)**
• **Kallesøe, Carsten**
 **8800 Viborg (DK)**

(74) Vertreter: **Patentanwälte Vollmann Hemmer Lindfeld**
**Partnerschaft mbB**
**Wallstraße 33a**
**23560 Lübeck (DE)**

(56) Entgegenhaltungen:
EP-A2- 0 729 086    EP-A2- 0 892 223
DE-A1- 3 417 935    DE-A1- 19 525 887
DE-A1- 19 842 174    DE-A1- 19 912 588

## Beschreibung

Die Erfindung betrifft ein Verfahren zum Begrenzen eines Versorgungsstromes in einem Wärmeübertragungssystem sowie in einer Heizungs- oder Klimaanlage sowie ein solches Wärmeübertragungssystem. Beispielsweise in Heizungsanlagen mit mehreren Heizkreisen, beispielsweise Fußbodenheizungen mit mehreren Heizkreisen, besteht das Problem, einen hydraulischen Ausgleich zwischen den mehreren Heizkreisen zu schaffen. Es ist dazu bekannt, in jedem Heizkreis ein Ausgleichsventil vorzusehen, mit welchem der Durchfluss durch den jeweiligen Heizkreis, d. h. insbesondere der Versorgungsstrom durch den Heizkreis begrenzt werden kann. Diese Anordnung hat den Nachteil, dass durch den fest voreingestellten Öffnungsgrad der Ausgleichsventile die Einstellung nur für einen Auslegungspunkt der Anlage optimal ist. In vom Auslegungspunkt abweichenden Betriebszuständen führt die Einstellung in der Regel zu einem erhöhten Energieverbrauch der Förderpumpen. Ferner ist die Einstellung solcher Ausgleichsventile recht mühsam. Anstelle manuell einzustellender Ausgleichsventile können auch differenzdruckgeregelte Ventile Verwendung finden. Diese sind jedoch mechanisch aufwändig und daher teuer.

EP 0 892 223 A1 offenbart eine Steuerung für eine Heizungsanlage mit mehreren parallelen Verbrauchern bzw. Heizkreisen. Die Steuerung sieht vor, den Volumenstrom in einer gemeinsamen zu den Heizkreisen führenden Vorlaufleitung auf eine Größe zu beschränken, welche an die Wärmeleistung eines Wärmeerzeugers angepasst ist. Dies erfolgt in einer zentralen Steuerung unter Erfassung der Volumenströme in den einzelnen Heizkreisen. Im Hinblick auf diesen Stand der Technik ist es Aufgabe der Erfindung, ein Verfahren zum Begrenzen eines Versorgungsstromes in einem Wärmeübertragungssystem sowie ein entsprechendes Wärmeübertragungssystem bereitzustellen, welches einen vereinfachten und verbesserten hydraulischen Ausgleich zwischen mehreren Heizkreisen ermöglicht.

Diese Aufgabe wird gelöst durch ein Verfahren mit den in Anspruch 1 angegebenen Merkmalen sowie ein Wärmeübertragungssystem mit den in Anspruch 10 angegebenen Merkmalen. Bevorzugte Ausführungsformen ergeben sich aus den zugehörigen Unteransprüchen, der nachfolgenden Beschreibung sowie den beigefügten Figuren. Dabei ist zu verstehen, dass die nachfolgend beschriebenen, bevorzugten Ausgestaltungen sowohl einzeln als auch in Kombinationen mehrerer der beschriebenen bevorzugten Merkmale verwirklicht werden können.

Das erfindungsgemäße Verfahren dient dem Begrenzen eines Versorgungsstromes in einem Wärmeübertragungssystem, wie beispielsweise einem Heizungs- oder Kühlsystem bzw. einer Klimaanlage. Das Wärmeübertragungssystem weist dabei zumindest eine Versorgungsleitung mit einem Versorgungsstrom auf. Diese Versorgungsleistung führt in dem Versorgungsstrom ein Wärmeübertragungsmedium, beispielsweise Wasser, einem Lastkreis zu. Bei einer Heizungsanlage kann die Versorgungsleitung sich ausgehend von einer Wärmequelle, wie einem Heizkessel, Wärmespeicher oder z. B. einer solarthermischen Anlage erstrecken. Im Falle einer Kühlanlage kann sich die Versorgungsleitung beispielsweise ausgehend von einer Kältemaschine erstrecken. Die Versorgungsleitung bildet dabei vorzugsweise Teil eines Kreislaufes, d. h. das Wärmeübertragungsmedium wird über einen Rücklauf der Wärmequelle bzw. der Kältequelle wieder zugeführt.

In der Versorgungsleitung weist der Versorgungsstrom eine Versorgungs-Eingangstemperatur auf. Dies ist die Temperatur, mit welcher der Versorgungsstrom ausgehend von einer Wärme- oder Kältequelle zugeführt wird. Das Wärmeübertragungssystem weist darüber hinaus zumindest einen Lastkreis, vorzugsweise mehrere, insbesondere parallel geschaltete Lastkreise auf. Der zumindest eine Lastkreis weist eine Lastpumpe auf, welche das Wärmeübertragungsmedium, beispielsweise ein Fluid wie z.B. Wasser, welches als Versorgungsstrom durch die Versorgungsleitung zugeführt wird, weiter durch den Lastkreis fördert. Sind mehrere Lastkreise vorhanden, so weist jeder Lastkreis vorzugsweise zumindest eine Lastpumpe auf. Die Lastpumpe sorgt für einen Laststrom durch den Lastkreis, wobei der Laststrom eine Last-Eingangs- und eine Last-Ausgangstemperatur aufweist. Die Last-Eingangstemperatur herrscht an der Eingangsseite des Lastkreises, die Last-Ausgangstemperatur herrscht an der Ausgangsseite des Lastkreises. Die Last-Eingangstemperatur wird erfindungsgemäß durch Veränderung des Versorgungsstroms eingestellt. D.h. der Versorgungsstrom wird reguliert, beispielsweise durch eine Pumpe oder ein Ventil, um dem Lastkreis eine solche Menge von Wärmeübertragungsmedium zuzuführen, dass die gewünschte Last-Eingangstemperatur bereitgestellt werden kann. Im Falle einer Heizungsanlage wird somit eine bestimmte Menge von Heizmedium pro Zeit, d.h. ein bestimmter Versorgungsstrom dem Lastkreis zugeführt, um die gewünschte Last-Eingangstemperatur einzustellen.

Erfindungsgemäß ist nun vorgesehen, den Versorgungsstrom nicht nur in Abhängigkeit der gewünschten Last-Eingangstemperatur einzustellen bzw. zu regeln, sondern den Versorgungsstrom zusätzlich in Abhängigkeit von zumindest einer in dem zumindest einen Lastkreis erfassten Temperatur auf einen Maximalstrom zu begrenzen. Diese Funktion ermöglicht einen hydraulischen Ausgleich, da zum einen ein Versorgungsstrom temperaturabhängig eingestellt werden kann, zum anderen der Versorgungsstrom jedoch nicht dauerhaft fest gedrosselt wird, wie es bei einem Ausgleichsventil der Fall ist. Somit ist eine optimalere Anpassung an verschiedene Betriebszustände möglich. Darüber hinaus kann gleichzeitig auf aufwändige Ventile, wie Differenzdruckventile, verzichtet werden, da die erfindungsgemäße Begrenzung auf einen Maximalstrom in Abhängigkeit einer erfassten Temperatur bevorzugt mit den ohnehin vorhandenen Stell- bzw. Regelelementen in dem Wärmeübertragungssystem erreicht werden kann. Es werden somit vorzugsweise keine zusätzlichen mechanischen Bauteile, wie Ventile etc., benötigt. Insofern ist es erfindungsgemäß vorgesehen, den Versorgungsstrom eben nicht direkt selber zu erfassen, sondern indirekt auf Grundlage weiterer Werte und einer in dem Lastkreis erfassten Temperatur zu bestimmen. Der so bestimmte bzw. geschätzte Versorgungsstrom wird dann mit einem gewünschten Maximalwert verglichen und gegebenenfalls auf diesen Maximalwert durch Verändern der Einstellungen des Wärmeübertragungssystems begrenzt. So wird sichergestellt, dass für jeden Lastkreis ein bestimmter maximaler Versorgungsstrom nicht überschritten wird, wodurch ein thermischer und hydraulischer Ausgleich zwischen mehreren Lastkreisen erreicht werden kann. Die Begrenzung des Versorgungsstromes kann dabei direkt oder indirekt durch Veränderung von den Versorgungsstrom beeinflussenden Parametern erfolgen.

Bevorzugt weist das Wärmeübertragungssystem wenigstens einen Wärmetauscher zwischen der Versorgungsleitung und dem Lastkreis auf. Ein solcher Wärmetauscher weist zwei Strömungswege auf, wobei ein erster Strömungsweg mit der Versorgungsleitung verbunden ist und somit Teil eines Versorgungskreises bilden kann, während ein zweiter Strömungsweg Teil des Lastkreises ist. In dem Wärmetauscher ist dann ein Wärmeübergang von dem ersten Strömungsweg auf den zweiten Strömungsweg oder im Falle einer Kühlanlage in umgekehrter Richtung möglich. Durch den Wärmetauscher sind der Versorgungsstrom und der Laststrom vollständig voneinander getrennt und es wird eine Temperaturänderung in dem Lastkreis durch Änderung des Durchflusses in dem Versorgungskreis möglich.

Über ein Ventil und/oder eine Pumpe kann der Versorgungsstrom, welcher dem Wärmetauscher zugeführt wird, eingestellt bzw. geregelt werden, um die Wärmemenge, welche dem Wärmetauscher zugeführt wird, einzustellen.

Alternativ oder zusätzlich kann das Wärmeübertragungssystem wenigstens eine Mischeinrichtung aufweisen, welche einen Last-Ausgangsstrom zumindest teilweise mit dem Versorgungstrom mischt. Über eine solche Mischeinrichtung kann ebenfalls eine Wärmeübertragung von dem Versorgungsstrom auf den Laststrom erfolgen, wobei dazu ein Teil des Versorgungsstroms in den Laststrom übergeht. Zur Einstellung der Temperatur in dem Lastkreis kann ein Teil des Rücklaufs, d. h. der Last-Ausgangsstrom, zumindest teilweise dem Versorgungsstrom an der Eingangsseite des Lastkreises zugemischt werden. So kann in einem Heizungssystem durch kälteres Wärmeübertragungsmedium die Last-Eingangstemperatur des Versorgungsstromes reduziert werden. Umgekehrt kann bei einer Klimaanlage die Temperatur am Eingang des Lastkreises erhöht werden. Das Mischverhältnis kann auch hierbei durch direkte oder indirekte Regulierung des Versorgungsstromes eingestellt werden. So kann der Versorgungsstrom beispielsweise durch eine Pumpe und/oder ein Ventil eingestellt werden. Wenn der so eingestellte Versorgungsstrom kleiner als der Laststrom ist, wird über die Mischeinrichtung aus dem Last-Ausgangsstrom Wärmeübertragungsmedium zugemischt.

Der Versorgungsstrom wird vorzugsweise auf Basis des Laststromes und eines oder mehrerer Temperatursignale eingestellt, welche in dem Wärmeübertragungssystem bestimmt werden, insbesondere auf Basis der Versorgungs-Eingangstemperatur, der Last-Eingangstemperatur und der Last-Ausgangstemperatur. Dabei ist die Versorgungs-Eingangstemperatur die Temperatur des Versorgungstromes vor dem Eintritt in den Lastkreis, d. h. vor einem Wärmetauscher und/oder einer Mischeinrichtung. Die Last-Eingangstemperatur ist die Eingangstemperatur an der Eingangsseite, d. h. vorzugsweise ausgangsseitig eines Wärmetauschers und/oder einer Mischeinrichtung. Die Last-Ausgangstemperatur ist die Temperatur an der Ausgangsseite des Lastkreises. Diese Temperatur kann einer Versorgungs-Ausgangstemperatur, d. h. der Temperatur im Rücklauf eines Versorgungskreises entsprechen. Der Laststrom wird in dem Wärmeübertragungssystem bzw. im Lastkreis erfasst. Dazu kann ein Strömungs-Sensor vorgesehen sein. Bevorzugt wird der Laststrom jedoch über die Lastpumpe bestimmt bzw. erfasst. In der Lastpumpe kann der Laststrom indirekt bestimmt werden, insbesondere unter Zugrundelegung elektrischer Größen, welche in einem elektrischen Antriebsmotor der Lastpumpe bestimmt werden. Zusätzlich kann ein Druckwert, insbesondere die Druckdifferenz über der Lastpumpe herangezogen werden, um den Laststrom indirekt zu bestimmen. Unter Zugrundelegung dieses Laststromes und bei gleichzeitiger Berücksichtigung der genannten Temperaturen kann der Versorgungsstrom indirekt bestimmt werden, ohne diesen direkt messen zu müssen. Beispielsweise kann der Versorgungsstrom auf Grundlage folgender Gleichung bestimmt werden:

$$q_S = \frac{T_L - T_R}{T_S - T_R} \cdot q_L$$

wobei qs der Versorgungsstrom, $q_L$ der Laststrom, $T_L$ die Last-Eingangstemperatur, $T_R$ die Last-Ausgangstemperatur und Ts die Versorgungseingangstemperatur ist. So ist es möglich, den Versorgungstrom auf Grundlage von Messwerten, welche in bekannten Systemen in der Regel ohnehin erfasst werden, zu bestimmen, sodass auf zusätzliche Sensoren verzichtet werden kann.

Die Begrenzung des Versorgungsstroms kann vorzugsweise indirekt durch wenigstens eine der nachfolgenden Maßnahmen erfolgen:

- Begrenzen des thermischen Leistungsflusses in dem Lastkreis,
- Begrenzen der Last-Ausgangstemperatur,
- Begrenzen der Differenz zwischen der Last-Ausgangstemperatur und der Last-Eingangstemperatur.

Dabei kann auch eine Kombination mehrerer Maßnahmen verwirklicht werden. Die einzelnen Maßnahmen bedeuten, dass nicht direkt ein Maximum für den Versorgungsstrom festgesetzt wird, sondern vielmehr ein Maximum für eine der anderen genannten Größen, nämlich beispielsweise für den thermischen Leistungsfluss in dem Lastkreis, für die Last-Ausgangstemperatur und/oder eine Differenz zwischen der Last-Ausgangstemperatur und der Last-Eingangstemperatur festgesetzt wird. Wird einer dieser Maximalwerte überschritten, kann dann entsprechend durch Begrenzung dieser Größen indirekt der Versorgungsstrom reduziert werden. Eine solche indirekte Begrenzung des Versorgungsstromes durch Begrenzung von Größen, welche von dem Versorgungsstrom abhängig sind, wird als eine Begrenzung des Versorgungsstroms auf einen Maximalstrom im Sinne der oben genannten Definition angesehen.

Gemäß einer bevorzugten Ausführungsform wird für zumindest zwei Eingangsvariablen jeweils ein maximaler Versorgungsstrom oder eine sich zu dem maximalen Versorgungsstrom monoton verhaltene Variable auf Grundlage einer der Eingangsvariablen bestimmt und anschließend wird einer der so bestimmten maximalen Versorgungsströme zur Begrenzung des Versorgungsstromes ausgewählt. Dies bedeutet, dass beispielsweise nach mehreren der oben genannten Maßnahmen zunächst ein maximaler Versorgungsstrom oder eine zu diesem monoton abhängige Variable, beispielsweise eine Pumpendrehzahl für eine Versorgungspumpe oder ein Ventilöffnungsgrad für ein Ventil in der Versorgungsleitung bestimmt wird. Auf diese Weise werden zunächst mehrere maximale Versorgungsströme bzw. dazu monoton in Beziehung stehende Variablen nach verschiedenen Verfahren bzw. auf Grundlage verschiedener Eingangsparameter bestimmt. Im nächsten Schritt kann dann einer dieser maximalen Versorgungsströme ausgewählt werden, um den Versorgungsstrom tatsächlich auf diesen zu begrenzen. Dabei kann beispielsweise der größte ermittelte maximale Versorgungsstrom oder der geringste maximale Versorgungsstrom bzw. eine zu diesen monoton in Beziehung stehende Variable ausgewählt werden, um den Versorgungsstrom zu begrenzen. Dies kann in einer Auswahleinrichtung bzw. einem Auswahlschritt geschehen, in welchem nach vorgegebenen Grundsätzen einer von mehreren ermittelten maximalen Versorgungsströmen ausgewählt wird, beispielsweise stets der größte oder stets der geringste.

Weiter bevorzugt wird der Versorgungsstrom durch Begrenzen der Drehzahl der Lastpumpe, der Drehzahl einer Versorgungspumpe und/oder durch Begrenzen eines Öffnungsgrades eines Ventils begrenzt. So kann beispielsweise die Lastpumpe zum Erzeugen eines Laststromes dienen, wobei durch Drehzahländerung der Lastpumpe auch der Versorgungsstrom beeinflusst werden kann. Dies gilt insbesondere bei Verwendung einer Mischeinrichtung, in welcher die Steuerung bzw. Regelung eine vorbestimmte Last-Eingangs-Temperatur sicherstellt und der Versorgungsstrom mit einem Teil des Rücklaufes aus dem Lastkreis gemischt wird. Dazu kann eine Mischleitung vorhanden sein, welche den Ausgang des Lastkreises mit einem Mischpunkt in der Versorgungsleitung verbindet. In der Versorgungsleitung stromaufwärts dieses Mischpunktes oder in der Rücklaufleitung stromabwärts des Abzweiges der Mischleitung kann ein Ventil angeordnet sein, um den Versorgungsstrom zu reduzieren. Ist in der Versorgungsleitung eine Versorgungspumpe angeordnet, beispielsweise bei Verwendung eines Wärmetauschers, so kann direkt die Drehzahl dieser Versorgungspumpe eingestellt und durch Begrenzung der Drehzahl der Versorgungsstrom begrenzt werden. Wird anstelle einer Versorgungspumpe ein Ventil in der Versorgungsleitung verwendet, kann eine Begrenzung durch Begrenzung des Öffnungsgrades dieses Ventils erfolgen.

In der Versorgungsleitung kann ein solches Ventil oder eine zuvor beschriebene Versorgungspumpe entweder in der eingangsseitigen Versorgungsleitung oder im Rückfluss angeordnet sein.

Gemäß einer weiteren bevorzugten Ausführungsform wird der Versorgungsstrom nicht direkt, sondern indirekt durch Begrenzen einer Stellgröße eines Druck- oder Temperaturreglers begrenzt. Ein solcher Druck- oder Temperaturregler kann vorgesehen sein, um den Last- und/oder Versorgungsstrom in Abhängigkeit eines Druckes bzw. eines Differenzdruckes oder einer Temperatur bzw. einer Temperaturdifferenz zu regeln. D. h. der Last- und/oder Versorgungsstrom wird variiert, um einen Druck- oder Temperaturwert auf einem gewünschten Wert zu halten. Dabei kann das Ausgangssignal eines solchen Reglers, nämlich die Stellgröße, beispielsweise die Drehzahl einer Pumpe, beispielsweise der Versorgungs- oder der Lastpumpe oder der Öffnungsgrad eines Ventils sein. Diese Stellgröße kann begrenzt werden, um so den Versorgungsstrom zu begrenzen.

Bevorzugt wird der Versorgungsstrom durch Begrenzen einer Stellgröße eines Regelkreises begrenzt, welcher eine Lasttemperatur und/oder einen Lastdruck in dem Lastkreis, insbesondere einen Differenzdruck über der Lastpumpe regelt. So kann beispielsweise die Drehzahl der Lastpumpe der genannten Regelkreise begrenzt werden, um den Versorgungsstrom in gewünschter Weise zu begrenzen. Bei Regelung der Lasttemperatur könnte entsprechend auch die Drehzahl einer Versorgungspumpe und/oder der Öffnungsgrad eines Versorgungsventils in der Versorgungsleitung bzw. im Rücklauf der Versorgungsleitung bzw. eines Versorgungskreises begrenzt werden.

Gegenstand der Erfindung ist neben dem vorangehend beschriebenen Verfahren auch ein Wärmeübertragungssystem, in welchem das vorangehend beschriebene Verfahren gegebenenfalls mit einer oder mehrerer seiner bevorzugten Ausgestaltungen zur Anwendung kommen kann. Das Wärmeübertragungssystem kann beispielsweise eine Heizungsanlage sein, in welcher Wärme von einer Wärmequelle, beispielsweise einem Heizkessel, zu einem Verbraucher, an welchem ein Lastkreis angeordnet ist, übertragen wird. Alternativ kann es sich um eine Klima- bzw. Kühlanlage handeln, bei welcher Wärme umgekehrt von einem Verbraucher über einen an diesem gelegenen Lastkreis zu einer Kältequelle übertragen wird. Auch eine kombinierte Anlage ist möglich.

Das erfindungsgemäße Wärmeübertragungssystem weist eine Versorgungsleitung zur Anbindung an eine Fluidversorgung und eine Rücklaufleitung zur Verbindung an einem Fluidrücklauf auf. Die Rücklaufleitung und die Versorgungsleitung können gemeinsam einen Versorgungskreis bilden. Die Fluidversorgung erfolgt dabei, wie beschrieben, von einer Wärmequelle oder einer Kältequelle, je nachdem ob es sich um ein Heizungs- oder Kühlsystem handelt. Als Fluid ist ein geeigneter Wärmeträger, beispielsweise Wasser oder gegebenenfalls auch Öl oder ein anderes Wärmeübertragungs- oder Kältemittel vorgesehen. Ferner ist zumindest ein Lastkreis vorgesehen mit einer in diesem angeordneten Lastpumpe. Die Lastpumpe sorgt für einen Laststrom durch den Lastkreis. Besonders bevorzugt sind mehrere parallel zueinander angeordnete Lastkreise mit jeweils einer Lastpumpe vorgesehen. Dies können beispielsweise mehrere Kreise einer Fußbodenheizungsanlage oder mehrere Heizungskreise eines zu temperierenden Gebäudes sein. Ferner ist eine Durchflussregeleinrichtung zum Regeln eines Versorgungsstromes in einer Versorgungsleitung vorgesehen. Dabei ist zu verstehen, dass die Durchflussregeleinrichtung in der Versorgungsleitung und/oder der Rücklaufleitung vorgesehen sein kann. Die Durchflussregeleinrichtung ist dabei derart ausgebildet und kann beispielsweise eine Versorgungspumpe oder ein Misch- bzw. Versorgungsventil sein, welches den Durchfluss in der Versorgungsleitung und/oder der Rücklaufleitung regelt. Die Durchflussregeleinrichtung ist derart ausgebildet, dass sie eine Last-Eingangstemperatur am Eingang des Lastkreises durch Regulierung des Versorgungsstromes regelt. Durch Änderung des Versorgungsstromes kann die zugeführte Wärmemenge zu dem Lastkreis verändert werden, bzw. die von dem Lastkreis abgeführte Wärmemenge in einer Kühlanlage bzw. Kühlanwendung reguliert werden. So kann beispielsweise in einem Heizungssystem zum Erhöhen der Last-Eingangstemperatur der Versorgungsstrom vergrößert und zum Verringern der Last-Eingangstemperatur der Versorgungsstrom verringert werden. Umgekehrt kann in einem Kühlsystem zum Verringern der Last-Eingangstemperatur der Versorgungsstrom erhöht werden.

Erfindungsgemäß ist ferner vorgesehen, dass in dem Lastkreis zumindest ein Temperatursensor angeordnet ist, welcher eine Temperatur des Laststromes erfasst. Ferner ist erfindungsgemäß wenigstens ein Begrenzungsregler vorgesehen, bzw. eine Begrenzungseinrichtung, welcher derart ausgebildet ist, dass er den Versorgungsstrom direkt oder indirekt auf ein vorbestimmtes Maximum in Abhängigkeit zumindest eines Temperatursignals von dem zumindest einen Temperatursensor begrenzt. Dies bedeutet, dass in dem beschriebenen Wärmeübertragungssystem der Versorgungsstrom nicht direkt erfasst wird, sondern lediglich indirekt geregelt bzw. eingestellt wird, nämlich in Abhängigkeit bzw. auf Grundlage des Signals von dem zumindest einen Temperatursensor. Es erfolgt somit eine indirekte Bestimmung des Versorgungsstromes, welcher dann gegebenenfalls begrenzt wird, sodass er einen Maximalwert, welcher voreingestellt ist, nicht überschreitet. Bei mehreren Lastkreisen kann so ein hydraulischer Ausgleich geschaffen werden, da sichergestellt wird, dass die Versorgungsströme zu den einzelnen Lastkreisen jeweils vorbestimmte Maxima nicht überschreiten können. Dennoch benötigt das Wärmeübertragungssystem im Wesentlichen keine zusätzlichen mechanischen Komponenten, insbesondere keine speziellen Begrenzungs- bzw. Ausgleichsventile, und bevorzugt auch keine Einrichtung zum direkten Bestimmen des Versorgungsstromes.

Gemäß einer bevorzugten Ausführungsform weist das Wärmeübertragungssystem einen Wärmetauscher zwischen der Versorgungsleitung und dem Lastkreis auf. Dieser Wärmetauscher kann zwei Strömungswege aufweisen, wobei ein erster Strömungsweg von der Versorgungsleitung zu der Rücklaufleitung verläuft, durch welchen der Versorgungsstrom strömt. Durch den zweiten Strömungsweg strömt der Lastkreis bzw. der Laststrom des Lastkreises, sodass ein Wärmeübergang von dem Versorgungsstrom zu dem Laststrom oder im Falle eines Kühlsystems in umgekehrter Richtung möglich ist. Alternativ oder zusätzlich kann das Wärmeübertragungssystem eine Mischleitung bzw. eine Mischeinrichtung aufweisen. Dies kann insbesondere eine Mischleitung sein, welche an einem Mischpunkt den Ausgang des Lastkreises mit der Versorgungsleitung verbindet. So kann über die Mischleitung an dem Mischpunkt dem Versorgungsstrom in der Versorgungsleitung, welcher zum Eingang des Lastkreises strömt, zumindest ein Teil des ausgangsseitigen Laststromes zugemischt werden, um die Temperatur am Eingang des Lastkreises, d. h. die Last-Eingangstemperatur, einstellen zu können. So kann im Falle eines Heizungssystems dem Versorgungsstrom ein Teil eines kälteren Rücklaufstroms zugemischt werden, um die Vorlauftemperatur zu senken. Umgekehrt kann im Falle eines Kühlsystems die Vorlauftemperatur durch Zumischen eines Teils eines wärmeren Rücklaufstromes erhöht werden.

Das erfindungsgemäße Wärmeübertragungssystem weist ferner vorzugsweise zumindest einen Druck- und/oder Temperaturregler für den Lastkreis auf, wobei dieser Regler mit dem Begrenzungsregler derart gekoppelt ist, dass eine Stellgröße in dem Druck- und/oder Temperaturregler durch den Begrenzungsregler auf einen Maximalwert begrenzt werden kann. Der Druck- und/oder Temperaturregler regelt bevorzugt, wie oben anhand einer bevorzugten Ausführungsform des Verfahrens beschrieben wurde, beispielsweise die Drehzahl einer Versorgungspumpe, den Öffnungsgrad eines Ventils in der Versorgungs- bzw. Rücklaufleitung und/oder die Drehzahl der Lastpumpe, um durch Drehzahländerung oder Änderung des Ventilöffnungsgrades den Druck bzw. eine Druckdifferenz und/oder die Temperatur auf einem gewünschten Wert zu halten. Die Stellgröße des Reglers, beispielsweise die einzustellende Pumpendrehzahl oder der Ventilöffnungsgrad kann durch den Begrenzungsregler auf einen Maximalwert begrenzt werden, um so indirekt den Versorgungsstrom auf einen Maximalwert zu begrenzen.

Weiter bevorzugt ist der Begrenzungsregler derart ausgebildet, dass er einen thermischen Leistungsfluss in dem Lastkreis und/oder die Last-Ausgangstemperatur und/oder eine Differenz zwischen der Last-Ausgangs- und der Last-Eingangstemperatur mit einem zugehörigen Grenzwert vergleicht und ein Maximum für eine Variable zur Einstellung des Versorgungsstromes definiert. Im Falle eines Heizsystems ist der Grenzwert ein Maximalwert und im Falle eines Kühlsystems ein Minimalwert. So kann der Versorgungsstrom auf Grundlage unterschiedlicher bzw. mehrerer Eingangsvariablen begrenzt werden. Diese Eingangsvariablen können der thermische Leistungsfluss bzw. Wärmestrom in dem Lastkreis, die Last-Ausgangstemperatur und/oder eine Differenz zwischen der Last-Ausgangs- und der Last-Eingangstemperatur sein. Die Temperaturen können direkt bestimmt werden. Der Wärmestrom bzw. thermische Leistungsfluss wird bevorzugt aus dem Laststrom und der Last-Eingangstemperatur sowie der Last-Ausgangstemperatur bestimmt. Der Begrenzungsregler kann so ausgebildet sein, dass er das Maximum für den Versorgungsstrom bzw. eine Variable zur Einstellung des Versorgungsstroms, d. h. ein Maximum dieser Variable auf Grundlage mehrerer der genannten Eingangsvariablen unabhängig bestimmt. So werden mehrere Maxima für den Versorgungsstrom bzw. für eine Variable zur Einstellung des Versorgungsstromes bestimmt. Aus diesen mehreren Maxima kann ein Wert zur tatsächlichen Begrenzung des Versorgungsstromes ausgewählt werden, nämlich beispielsweise das größte bestimmte Maximum oder das kleinste bestimmte Maximum. Dies kann durch eine Auswahleinrichtung bzw. einen Auswahlregler geschehen. Die Variable zur Einstellung des Versorgungsstroms kann beispielsweise die Drehzahl für eine Pumpe, beispielsweise der Versorgungs- oder Lastpumpe, oder ein Ventilöffnungsgrad sein.

Gemäß einer weiteren bevorzugten Ausführungsform ist der wenigstens eine Temperatursensor, ein Temperatursensor, welcher an dem Eingang des Lastkreises angeordnet ist und eine Last-Eingangstemperatur erfasst oder ein Temperatursensor, welcher an dem Ausgang des Lastkreises angeordnet ist und eine Last-Ausgangstemperatur erfasst. Bei der Last-Eingangstemperatur und der Last-Ausgangstemperatur handelt es sich um Temperaturen des Fluids im Laststrom an dem Eingang bzw. Ausgang des Lastkreises. Es können auch zwei Temperatursensoren vorgesehen sein, um sowohl die Last-Eingangstemperatur als auch die Last-Ausgangstemperatur zu erfassen.

Die Durchflussregeleinrichtung umfasst zumindest bevorzugt, wie oben bereits ausgeführt, zumindest eine den Versorgungsstrom regelnde Versorgungspumpe und/oder ein den Versorgungsstrom regelndes Versorgungsventil, welche entweder in der Versorgungsleitung oder der Rücklaufleitung angeordnet sein können.

Gemäß einer besonders bevorzugten Ausführungsform ist die Lastpumpe zum Erfassen eines Durchflusses durch den Lastkreis, d. h. zum Erfassen des Laststromes ausgebildet und vorzugsweise mit der Durchflussregeleinrichtung zur Übertragung eines zu dem erfassten Durchfluss korrespondierenden Signals verbunden. So kann auf eine separate Durchflussmesseinrichtung bzw. einen Strömungssensor zum direkten Erfassen des Laststromes verzichtet werden. Der Laststrom kann vielmehr aus anderen Größen abgeleitet werden, beispielsweise aus der Drehzahl, dem Druckdifferenz und der elektrischen Leistungsaufnahme des Antriebsmotors der Lastpumpe bestimmt werden.

Besonders bevorzugt sind die Durchflussregeleinrichtung und/oder der Begrenzungsregler in ein die Lastpumpe bildendes Lastpumpenaggregat integriert. So kann auf eine separate Steuereinrichtung verzichtet werden und alle für die Regelung und insbesondere Begrenzung des Versorgungsstromes notwendigen Komponenten, insbesondere Steuerung- bzw. Regelungskomponenten, können in das Lastpumpenaggregat integriert sein. Dies ist insbesondere dann von Vorteil, wenn auch der Laststrom in dem Lastpumpenaggregat selber bestimmt bzw. erfasst wird, sodass hier keine Leistungsverbindungen zu externen Sensoren erforderlich sind.

Nachfolgend wird die Erfindung beispielhaft anhand der beigefügten Figuren beschrieben. In diesen zeigt:

Fig. 1  ein Wärmeübertragungssystem, wie es aus dem Stand der Technik bekannt ist,

Fig. 2  ein Beispiel für verknüpfte Regler zur Begrenzung des Versorgungsstromes durch Drehzahländerung einer Pumpe,

Fig. 3  ein Beispiel für verknüpfte Regler zur Begrenzung des Wärmeflusses und zur Begrenzung der Drehzahl einer Pumpe,

Fig. 4  Wärmeemissionskurven eines Heizkörpers,

Fig. 5a, 5b  Pumpenkennlinien zur Ermittlung des Durchflusses an der Pumpe,

Fig. 6  ein Beispiel für verknüpfte Regler zur Begrenzung der Rücklauftemperatur durch Begrenzen einer Pumpendrehzahl,

Fig. 7  verknüpfte Regler zum Begrenzen der Temperaturdifferenz in einem Mischkreis durch Begrenzung einer Pumpendrehzahl,

Fig.8  die Verknüpfung mehrerer verschiedener Regler zur Begrenzung des Versorgungsstromes durch Begrenzung der Drehzahl einer Pumpe,

Fig. 9a - 9c      drei Beispiele für Wärmeübertragungssysteme mit Mischkreisen gemäß der Erfindung,

Fig. 10      ein Beispiel für verknüpfte Regler zum Begrenzen des Versorgungsstromes durch Begrenzung einer Stellgröße eines Temperaturreglers,

Fig. 11      ein Beispiel für verknüpfte Regler zum Begrenzen des Wärmestroms durch Begrenzen einer Stellgröße eines Temperaturreglers,

Fig. 12      ein Beispiel für gekoppelte Regler zum Begrenzen der Rücklauftemperatur durch Begrenzung einer Stellgröße in einem Temperaturregler,

Fig. 13      verknüpfte Regler zum Begrenzen der Temperaturdifferenz in einem Mischkreis durch Brenzen einer Stellgröße in einem Temperaturregler und

Fig. 14a - 14c      drei Beispiele von Wärmeübertragungssystemen in Mischkreisen gemäß der Erfindung.

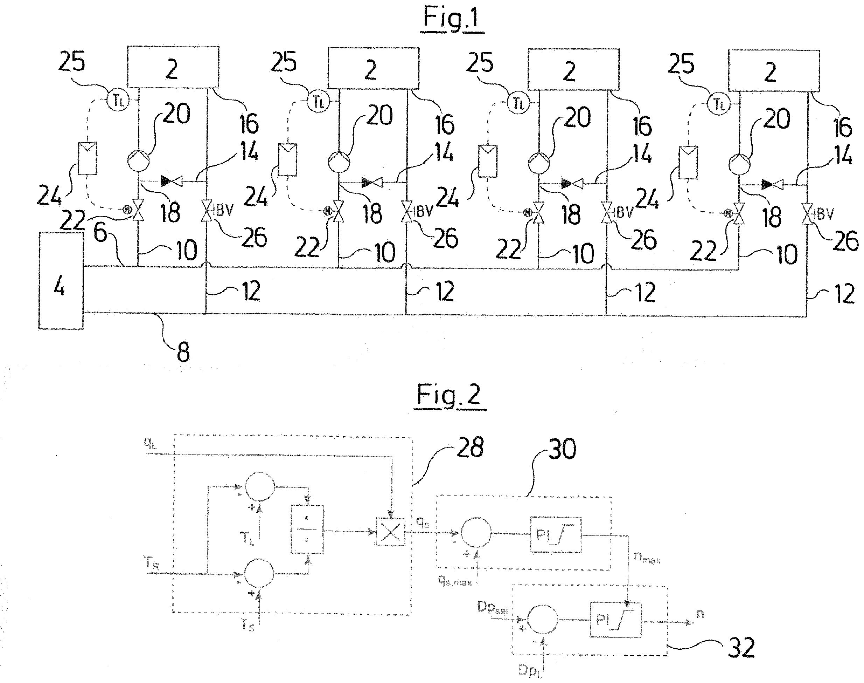

Fig. 1 zeigt ein herkömmliches Wärmeübertragungssystem mit vier Heizkreisen, beispielsweise Heizkreisen einer Fußbodenheizung. Die vier Heizkreise weisen jeweils Wärmeübertrager für zu temperierende Objekte in Form von Lastkreisen 2 auf. Diese werden von einer Wärmequelle 4 über eine Versorgung 3 bzw. einen Versorgungskreis, welcher einen Hinlauf 6 und einen Rücklauf 8 aufweist, versorgt. Von dem Hinlauf 6 führen Versorgungsleitungen 10 zu den einzelnen Lastkreisen 2 und entsprechend führen Rücklaufleitungen 12 zurück zu dem Rücklauf 8 des Versorgungskreises. Zur Regulierung der Vorlauftemperatur in den Lastkreisen 2 am Eingang, d. h. der Last-Eingangstemperatur $T_L$, sind vorliegend in der Versorgung zu den Lastkreisen 2 Mischeinrichtungen vorgesehen. Diese Mischeinrichtungen bestehen aus einer Mischverbindung bzw. einer Mischleitung 14, welche die Ausgänge 16 der Lastkreise 2 mit einem Mischpunkt 18 in der Versorgungsleitung 10 verbindet. Die Lastkreise weisen jeweils eine Lastpumpe 20 auf, welche einen Laststrom durch den Lastkreis 2 erzeugt, d. h. das Wärmeübertragungsmedium durch den Lastkreis 2 fördert. Dabei liegt die Lastpumpe 20 stromabwärts des Mischpunktes 18, sodass die Strömung durch die Lastpumpe 20 sowohl Wärmeübertragungsmedium bzw. Fluid aus der Mischleitung 14 als auch aus der Versorgungsleitung 10 umfasst. So kann dem Versorgungsstrom in der Versorgungsleitung 10, welcher ebenfalls von der Lastpumpe 20 erzeugt wird, ein Mischstrom durch die Mischleitung 14 aus dem Ausgang bzw. dem Rücklauf des Lastkreises 2 zugemischt werden, um die Vorlauftemperatur an der Eingangsseite, d. h. die Last-Eingangstemperatur $T_L$ gegenüber der Temperatur im Hinlauf 6 des Versorgungskreises zu reduzieren.

Die Einstellung des Mischungsverhältnisses erfolgt über ein Mischventil 22, welches über einen Temperaturregler 24 angesteuert wird. Dazu kann das Mischventil 22 beispielsweise elektromotorisch in seinem Öffnungsgrad verstellt werden. Der Temperaturregler 24 erfasst ein Tempermatursignal korrespondierend zu der Last-Eingangstemperatur $T_L$ von einem Temperatursensor 25. In dem hier gezeigten Beispiel ist das Mischventil 22 in der Versorgungsleitung 10 stromaufwärts des Mischpunktes 18 angeordnet. Das Mischventil könnte jedoch auch alternativ in der Rücklaufleitung 12 stromabwärts des Abzweiges der Mischleitung 14 angeordnet sein. Wenn die Lastpumpe 20 beim Schließen des Mischventils 22 einen vorbestimmten Förderstrom, d. h. Laststrom, fördert, so wird der Versorgungsstrom in der Versorgungsleitung 10 reduziert und die Differenz zu dem Laststrom über die Mischleitung 14 angesaugt, sodass sich ein Mischstrom in der Mischleitung 14 erhöht. Wenn die Lasteingangstemperatur $T_L$ erhöht werden soll, wird über den Temperaturregler 24 das Mischventil 22 geöffnet, sodass sich der Versorgungsstrom in der Versorgungsleitung 10 vergrößert und entsprechend der Anteil am Laststrom, welcher über die Mischleitung 14 aus dem Rücklauf bereitgestellt wird, verringert.

Es ist zu verstehen, dass dasselbe System auch in einem Kühlsystem funktionieren würde, bei welchem anstatt einer Wärmequelle 4 eine Kältequelle vorgesehen ist. In einem solchen System würde die Mischeinrichtung mit der Mischleitung 14 lediglich nicht zur Reduzierung der Vorlauftemperatur, sondern umgekehrt zur Erhöhung der Vorlauftemperatur durch Zumischen des Wärmeübertragungsmediums aus dem Rücklauf dienen.

Bei der bekannten Anordnung, wie sie in Fig. 1 gezeigt ist, sind darüber hinaus Ausgleichsventile (balancing valves) 26 in den Rücklaufleitungen 12 stromabwärts des Abzweiges der Mischleitung 14 angeordnet. Die Ausgleichsventile 26 dienen dem hydraulischen Ausgleich zwischen den mehreren Lastkreisen, indem sie den maximalen Versorgungsstrom durch die Versorgungsleitung 10 und die Rücklaufleitung 12 für den einzelnen Lastkreis begrenzen. Diese Ventile werden manuell eingestellt. Dies ist zum einen aufwändig, zum anderen besteht das Problem, dass eine optimale Einstellung nur für einen Auslegungspunkt erreicht werden kann und in anderen Betriebszuständen so keine optimale Einstellung gegeben ist und die Ausgleichsventile 26 als unnötige Drosseln wirken, was eine erhöhte Leistung der Pumpen im System erfordert.

Dieser Nachteil wird erfindungsgemäß vermieden, da in dem erfindungsgemäßen System die Ausgleichsventile 26 entfallen. Die Begrenzung des Versorgungsstromes qs in der Versorgungsleitung 10 zum hydraulischen Ausgleich zwischen den mehreren Lastkreisen 2 wird vielmehr durch eine elektronische Regelung der ohnehin vorhandenen Ventile und Pumpen, welche den Versorgungsstrom einstellen, erreicht, d. h. beispielsweise durch entsprechende Steuerung bzw. Regelung der Lastpumpe 20 und/oder eines Mischventils 22.

Erfindungsgemäß ist dafür vorgesehen, den Versorgungsstrom qs nicht direkt erfassen zu müssen, sondern vielmehr den Versorgungsstrom qs unter Berücksichtigung zumindest eines in dem Lastkreis 2 erfassten Temperaturwertes zu bestimmen und dann gegebenenfalls auf einen Maximalwert zu begrenzen.

Der Berechnung bzw. Bestimmung des Versorgungsstroms qs kann der folgende Zusammenhang zwischen Versorgungsstrom qs, Laststrom $q_L$, Last-Eingangstemperatur $T_L$ an der Eingangsseite des Lastkreises 2, der Last-Ausgangstemperatur $T_R$ an der Ausgangsseite 16 des Lastkreises sowie der Versorgungseingangstemperatur Ts in der Versorgungsleitung 10 zugrundegelegt werden:

$$q_S = \frac{T_L - T_R}{T_S - T_R} \cdot q_L$$

D. h. in Kenntnis des Laststromes $q_L$ im Lastkreis 2 sowie der vorgenannten Temperaturen an der Eingangsseite und der Ausgangsseite des Lastkreises 2 sowie im Versorgungsstrom qs in der Versorgungsleitung 10 kann aus diesem Zusammenhang der Versorgungsstrom errechnet werden, sodass er nicht direkt bestimmt werden muss. Der Laststrom $q_L$ kann beispielsweise, wie weiter unten erläutert werden wird, direkt in der Lastpumpe 20 aus Betriebsparametern der Lastpumpe 20 bestimmt werden.

Fig. 2 zeigt ein erstes Beispiel für eine Kombination von Reglern zur Begrenzung des Versorgungsstromes qs unter Berücksichtigung des Laststromes $q_L$, der Last-Eingangstemperatur $T_L$, der Last-Ausgangstemperatur $T_R$ sowie der Versorgungs-Eingangstemperatur Ts. So ist ein Versorgungsstrom-Bestimmungsmodul 28 vorgesehen, in welchem gemäß der oben angegebenen Gleichung aus den zuvor genannten Größen der Versorgungsstrom qs bestimmt wird. Der so ermittelte Versorgungsstrom qs wird einem Begrenzungsregler 30 als Eingangsgröße zugeführt, in welchem der so bestimmte Versorgungsstrom qs mit einem vorbestimmten maximalen Versorgungsstrom $q_{S,max}$ verglichen wird. In diesem Beispiel gibt der Begrenzungsregler 30 bei Erreichen des vorbestimmten Maximalförderstroms $q_{S,max}$ eine Maximaldrehzahl $n_{max}$ aus, welche als Stellgröße einem Druckregler 32 zugeführt wird. Der Druckregler 32 regelt den Differenzdruck über der Lastpumpe 20, d. h. zwischen Ein- und Ausgang der Lastpumpe 20. Dabei handelt es sich um den Differenzdruck $Dp_L$ über dem Lastkreis 2. Von dem Druckregler 32 wird dieser Differenzdruck auf einen Solldiffe-renzdruck $Dp_{set}$ geregelt. Der Druckregler 32 gibt als Ausgangsgröße eine Drehzahl n aus, mit welcher die Lastpumpe 20, welche einen drehzahlregelbaren Antriebsmotor aufweist, betrieben wird. Dabei wird die von dem Begrenzungsregler vorgegebene Maximaldrehzahl $n_{max}$ derart berücksichtigt, dass die Drehzahl n auf diesen Maximalwert begrenzt wird. D. h. die Lastpumpe 20 wird so maximal mit der von dem Begrenzungsregler 30 vorgegebenen Maximaldrehzahl $n_{max}$ betrieben, sodass der Laststrom $q_L$ und somit indirekt auch der Versorgungsstrom qs begrenzt werden.

Dies ergibt sich aus der thermischen Beziehung zwischen Last- und Versorgungsstrom, wenn eine Temperatur in dem Lastkreis, z. B. die Last-Eingangs-Temperatur, durch Einstellen des Versorgungsstromes geregelt wird. Der Versorgungsstrom ergibt sich so aus dem Wärmebedarf des Lastkreises.

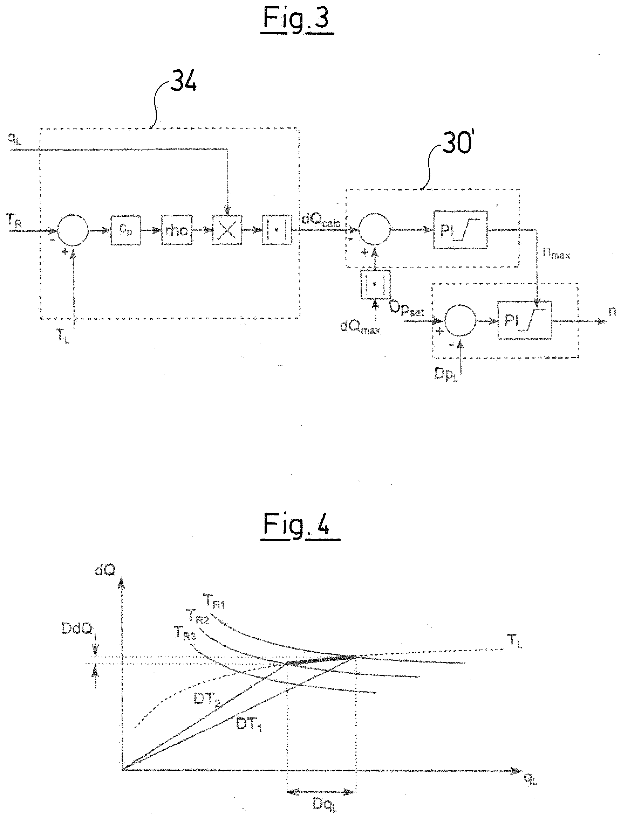

Fig. 3 zeigt ein weiteres Beispiel für einen Verknüpfung mehrerer Regler, wobei hier nicht direkt der Versorgungsstrom qs, sondern stattdessen in einem Wärmestrom-Bestimmungsmodul 34 der Wärmestrom $dQ_{calc}$ zugrunde gelegt wird. Auch zur Bestimmung des Wärmestroms $dQ_{calc}$ werden der Laststrom $q_L$, die Last-Eingangstemperatur $T_L$ sowie die Last-Ausgangstemperatur $T_R$ berücksichtigt. So kann der absolute bzw. gesamte Wärmestrom $dQ_{calc}$, welcher über die Versorgungsleitung 10 im Lastkreis zugeführt wird, berechnet werden. In dem Begrenzungsregler 30' wird dieser Wärmestrom $dQ_{calc}$ mit einem Maximalwärmestrom $dQ_{max}$, welcher vorgegeben ist, verglichen. Der Begrenzungsregler 30' gibt wie der Begrenzungsregler 30 eine maximale Drehzahl $n_{max}$ für die Lastpumpe 20 aus, welche dann dem Druckregler 32 zugeführt wird, wie es oben beschrieben wurde.

Auch mit der in Fig. 3 gezeigten Variante wird so eine Begrenzung des Versorgungsstromes qs erreicht, da durch Begrenzung der Drehzahl der Lastpumpe 20 indirekt auch der Versorgungsstrom qs begrenzt wird. Der berücksichtigte Wärmestrom $dQ_{calc}$ ist nach folgender Gleichung von dem Laststrom $q_L$. sowie der Last-Eingangstemperatur $T_L$ sowie der Last-Ausgangstemperatur $T_R$ abhängig:

$$dQ_{calc} = |q_L \, rho \, c_P (T_L - T_R)|$$

In der vorgenannten Gleichung ist $c_p$ die spezifische Wärmekapazität des Wärmeträgermediums, d. h. Fluids, welches durch das System als Wärmeträger strömt. Bei rho handelt es sich um Dichte bzw. Massendichte dieses Fluids. Aus der Darstellung in Fig. 4 ist zu erkennen, dass der Laststrom $q_L$ reduziert bzw. begrenzt werden kann durch Begrenzung des Wärmestroms $dQ_{calc}$. In Fig. 4 zeigen die Linien $T_{R1}$, $T_{R2}$ und $T_{R3}$ konstante Rücklauftemperaturkurven eines Heizkörpers bzw. Wärmetauschers, welcher z. B. auch ein Fußbodenheizungskreis sein kann. Wenn ein solcher Heizkörper mit einer spezifischen Last-Eingangstemperaturkurve $T_L$ betrieben wird, kann durch Reduzierung des Wärmestroms dQ um das Maß DdQ der Laststrom $q_L$ und um ein relativ gro-βes Maß $Dq_L$ reduziert werden. Gleichzeitig sinkt die Rücklauftemperatur bzw. die Last-Ausgangstemperatur auf den Wert $T_{R2}$, sodass sich in oben genannter Gleichung der Betrag des Terms $T_L - T_R$ vergrößert. Dies zeigt, dass so notwendigerweise auch der Laststrom $q_L$ reduziert wird. Dies bedeutet, durch Begrenzung des Wärmestroms dQ auf einen Maximalwert $dQ_{max}$ ist es möglich, den Laststrom $q_L$ auf einen Maximalwert zu begrenzen, um so einen hydraulischen Ausgleich zu schaffen.

Wie oben angesprochen, kann der Laststrom direkt in der Lastpumpe 20 bestimmt werden. Dies erfolgt durch eine Berechnung bzw. Schätzung auf Grundlage von Betriebsparametern der Lastpumpe 20, nämlich der aktuellen Drehzahl n und des Differenzdruckes Dp über der Lastpumpe oder auf Grundlage der Drehzahl n und der aufgenommenen elektrischen Leistung P des Antriebsmotors der Lastpumpe 20.

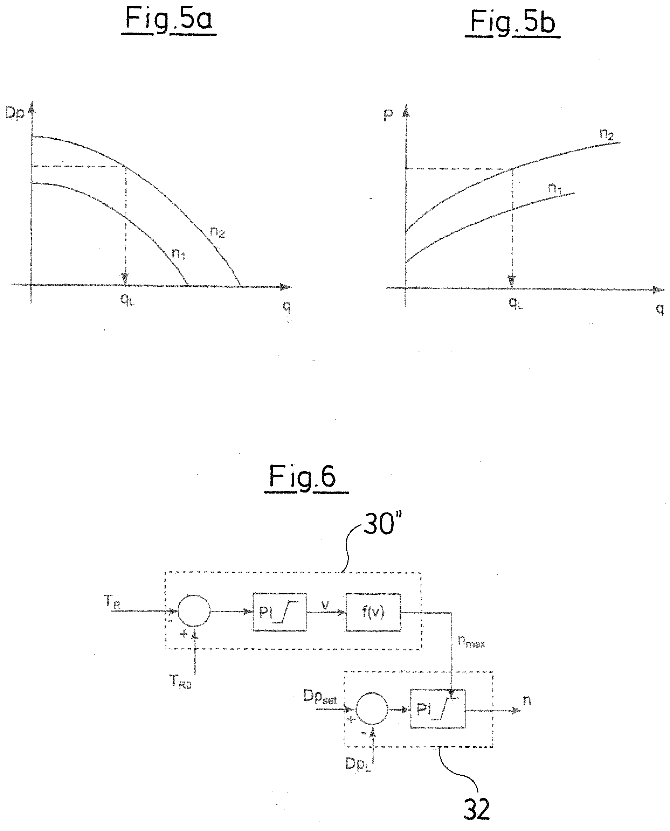

Fig. 5a zeigt ein Diagramm, in welchem der Differenzdruck Dp dem Durchfluss q für verschiedene Drehzahlen $n_1$ und $n_2$ gegenübergestellt ist. Es ist zu erkennen, dass bei bekannter Drehzahl und bei bekanntem Differenzdruck Dp der Laststrom $q_L$ berechnet werden kann, wenn die gezeigten Pumpenkennlinien bekannt sind. Entsprechend zeigt Fig. 5b die elektrische Leistung P gegenüber dem Durchfluss q aufgetragen. Auch in diesem Diagramm sind bekannte Kennlinien für die Drehzahlen $n_1$ und $n_2$ eingezeichnet. Auch hier ist zu erkennen, dass bei bekannten Kennlinien der Pumpe aus der Drehzahl n und der elektrischen Leistung P der Laststrom $q_L$ bestimmt werden kann. So kann auf einen speziellen Strömungssensor zum Erfassen des Laststromes $q_L$ verzichtet werden.

Eine gegenüber den in Fig. 2 und 3 gezeigten Regleranordnungen dritte Variante der Begrenzung des Versorgungsstromes qs auf indirektem Wege ist durch die beispielhaft in Fig. 6 gezeigte Regleranordnung möglich. So kann Begrenzungsregler 30" die Last-Ausgangstemperatur $T_R$ am Ausgang 16 des Lastkreises 2 auf einen Grenzwert $T_{R0}$ begrenzen. Bei Erreichen des Grenzwertes $T_{R0}$ gibt der Begrenzungsregler 30" eine Maximaldrehzahl $n_{max}$ an den Druckregler 32 aus, welcher genauso ausgestaltet ist, wie es anhand von Figuren 2 und 3 beschrieben wurde.

Auf diese Weise können zu hohe Rücklauftemperaturen, d. h. Last-Ausgangstemperaturen $T_R$ am Ausgang 16 des Lastkreises verhindert werden, welche den thermischen Wirkungsgrad des Systems verschlechtern würden.

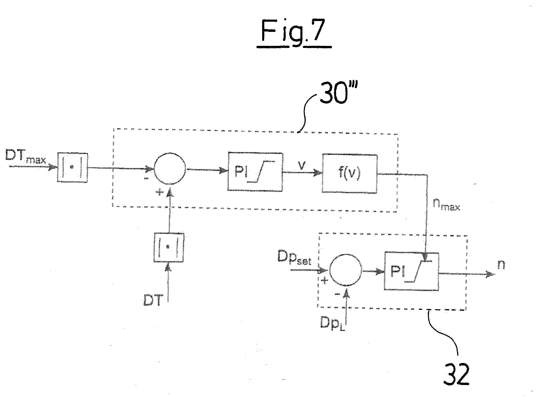

Eine weitere Möglichkeit, einen hydraulischen Ausgleich zwischen mehreren Lastkreisen zu schaffen, kann durch die Regleranordnung erreicht werden, welche in Fig. 7 gezeigt ist. Mit diesem Regler wird die Temperaturdifferenz DT über den Lastkreis, d. h. die Differenz zwischen Last-Eingangstemperatur $T_L$ und Last-Ausgangstemperatur $T_R$ über- oder unterhalb einem vorgegebenen Grenzwert $DT_{max}$ gehalten. Mit einer Erhöhung des Betrages der Temperaturdifferenz |DT| wird sich der Laststrom $q_L$ und damit, wie oben beschrieben, auch der Versorgungsstrom qs verringern, sodass hierüber eine indirekte Begrenzung des Versorgungsstromes qs zum hydraulischen Ausgleich möglich ist. In dem Begrenzungsregler 30‴, welcher in Fig. 7 gezeigt ist, werden die Werte der maximalen Temperaturdifferenz $DT_{max}$ sowie der erfassten Temperaturdifferenz DT als Beträge ohne Vorzeichen berücksichtigt, sodass dieser Regler in gleicher Ausgestaltung für Heiz- wie auch für Kühlsysteme Verwendung finden kann. Wenn die Temperaturdifferenz den genannten Grenzwert $DT_{max}$ erreicht, gibt der Begrenzungsregler 30‴ eine Maximaldrehzahl $n_{max}$ an den Druckregler 32 aus, wie es oben anhand der Figuren 2, 3 und 6 beschrieben wurde. So wird auch hier die Drehzahl der Pumpe und damit der Laststrom $q_L$ und gleichzeitig der Versorgungsstrom qs begrenzt.

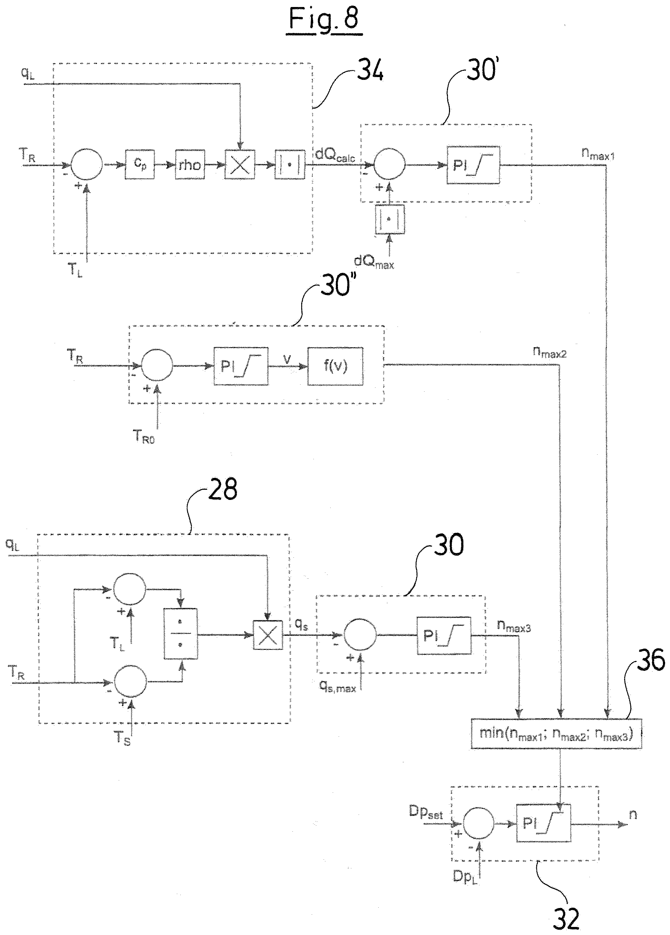

Fig. 8 zeigt nun eine Kombination mehrerer der vorangehend beschriebenen Regler. So ist oben in Figur 8 zunächst das Wärmestrom-Bestimmungsmodul 34 mit dem Begrenzungsregler 30' gezeigt. In der Mitte ist der Begrenzungsregler 30" aus Fig. 6 gezeigt. In Fig. 8 unten ist die Anordnung des Versorgungsstrom-Bestimmungsmoduls 28 mit dem Begrenzungsregler 30 aus Fig. 2 gezeigt. In diesem Beispiel gibt der Begrenzungsregler 30' eine maximale Drehzahl $n_{max1}$, der Begrenzungsregler 30" eine Maximaldrehzahl $n_{max2}$ und der Begrenzungsregler 30 eine Maximaldrehzahl $n_{max3}$ für die Lastpumpe aus. Diese drei Maximaldrehzahlen $n_{max1}$, $n_{max2}$ und $n_{max3}$ werden einem Auswahlregler 36 bzw. einer Auswahleinrichtung 36 zugeführt, in welcher eine dieser mehreren Maximaldrehzahlen ausgewählt wird. Im gezeigten Beispiel ist das die kleinste der drei maximalen Drehzahlen $n_{max1}$, $n_{max2}$ und $n_{max3}$. Diese wird dann wie anhand der Figuren 2, 6 und 3 beschrieben, an den Druckregler 32 als Stellgröße bzw. Maximaldrehzahl übergeben, sodass die von dem Druckregler 32 ausgegebene Drehzahl n auf den kleinsten Wert der so ermittelten drei Maximaldrehzahlen $n_{max1}$, $n_{max2}$ und $n_{max3}$ begrenzt wird. Anstatt in dem Auswahlregler 36 die kleinste dieser Drehzahlen auszuwählen, könnte diese auch ausgestaltet sein, sodass die größte dieser drei Drehzahlen ausgewählt wird.

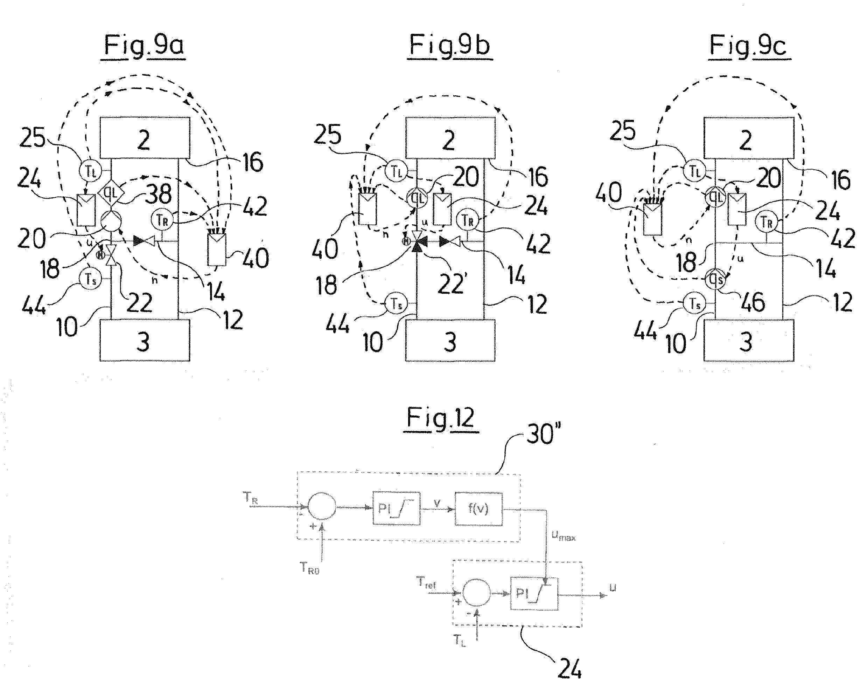

Fig. 9a - 9c zeigen nun drei Beispiele für Lastkreise 2 mit zugehörigen Mischkreisen eines Wärmeübertragungssystems, wobei zu verstehen ist, dass in dem Wärmeübertragungssystems jeweils mehrere derartige Anordnungen von Lastkreisen vorhanden sein können. Die Anordnung in Fig. 9a entspricht im Wesentlichen der in Fig. 1 gezeigten Anordnung. Die Versorgung 3 umfasst dabei den Hinlauf 6 und den Rücklauf 8 und sind hier lediglich vereinfacht dargestellt. Erfindungsgemäß entfällt gegenüber dem Ausführungsbeispiel in Fig. 1 das Ausgleichsventil 26 in der Rücklaufleitung 12. Im Zulauf zu dem Lastkreis 2 ist neben der Lastpumpe 20 hier noch ein Strömungssensor 38 angeordnet, welcher den Laststrom $q_L$ erfasst. Alternativ kann der Laststrom $q_L$ aber auch, wie oben beschrieben, direkt in der Lastpumpe 20 ermittelt werden. Auch hier ist ein Temperaturregler 24 vorgesehen, welcher die Lasteingangstemperatur $T_L$ durch Einstellung des Mischventils 22 in der anhand von Fig. 1 beschriebenen Weise regelt. Die Anordnung enthält darüber hinaus einen Ausgleichsregler in Form eines Regelmoduls 40 zur Begrenzung des Versorgungsstroms qs in der oben beschriebenen Weise. Das Regelmodul 40 erhält, wie in Fig. 9a dargestellt ist, als Eingangsgrößen den Laststrom $q_L$, die Lasteingangstemperatur $T_L$, die Versorgungseingangstemperatur Ts sowie die Lastausgangstemperatur $T_R$, welche hier nicht direkt am Ausgang 16, sondern in der Mischleitung 14 von einem Temperatursensor erfasst wird. Der Temperatursensor 42 zur Erfassung der Lastausgangstemperatur $T_R$ könnte jedoch auch am Ausgang 16 angeordnet sein. Die Temperatur am Ausgang 16 entspricht im Wesentlichen der Temperatur in der Mischleitung 14. Die Versorgungseingangstemperatur Ts wird durch einen Temperatursensor 44 in der Versorgungsleitung 10 erfasst. Der Regler 40 enthält eine Regleranordnung, wie sie anhand der Figuren 2, 3, 6, 7 und/oder Fig. 8 beschrieben wurde und gibt über den ebenfalls in dem Regelmodul 40 enthaltenen Druckregler 32 die Drehzahl, mit welcher die Lastpumpe 20 betrieben wird, aus. Da die Drehzahl n in der beschriebenen Weise durch die genannten Regelmodule auf einen Maximalwert begrenzt wird, wird so über das Regelmodul 40 in der oben beschriebenen Weise auch der Versorgungsstrom qs auf ein Maximum begrenzt.

Fig. 9b zeigt eine alternative Anordnung, welche sich von der Ausgestaltung gemäß Fig. 9a darin unterscheidet, dass das Mischventil 22' als 3/2-Wegeventil direkt im Mischpunkt 18 angeordnet ist. Der Temperaturregler 24 steuert dieses Mischventil 22' zur Regelung der Last-Eingangstemperatur $T_L$ an. das zusätzliche Regelmodul 40 entspricht dem anhand von Fig. 9a beschriebenen Regelmodul. Lediglich wird hier der Laststrom $q_L$ nicht über einen separaten Sensor, sondern wie oben beschrieben über die Lastpumpe 20 bzw. deren Betriebsparameter bestimmt. Auch hier nimmt das Regelmodul 40, wie oben beschrieben, eine Begrenzung des Versorgungsstromes qs durch Begrenzung der Drehzahl n der Lastpumpe 20 vor.

Eine dritte Variante des Lastkreises 2 mit Mischkreis eines erfindungsgemäßen Wärmeübertragungssystems ist in Fig. 9c gezeigt. Die dort gezeigte Ausführungsform entspricht der in Fig. 9b gezeigten Ausführungsform mit dem Unterscheid, dass das Mischventil 22' entfällt und stattdessen in der Versorgungsleitung 10 eine Versorgungspumpe 46 angeordnet ist. Die Versorgungspumpe 46 wird von dem Temperaturregler 24 in ihrer Drehzahl geregelt, um die Last-Eingangstemperatur $T_L$ auf einen vorgegebenen bzw. gewünschten Wert zu regeln. D. h. über die Versorgungspumpe 45 wird der Versorgungsstrom qs, welcher dem Mischpunkt 18 zugeführt wird, geregelt. Wenn der Laststrom $q_L$, welcher von der Lastpumpe 20 erzeugt wird, größer als der Versorgungsstrom qs ist, wird von der Lastpumpe 20 zusätzlich ein Mischstrom über die Mischleitung 14 erzeugt. Zusätzlich bewirkt das Regelmodul 40 in der oben beschriebenen Weise eine Begrenzung des Versorgungsstromes qs, indem es die Drehzahl n der Lastpumpe 20, wie anhand der Figuren 2, 3, 6, 7 und/oder 8 erläutert, begrenzt. Wenn die Drehzahl n der Lastpumpe 20 so begrenzt bzw. reduziert wird, verringert sich der Laststrom $q_L$. Wenn nun die Versorgungspumpe 46 zunächst einen unveränderten Versorgungsstrom qs liefert, führt dies dazu, dass die Zumischung bzw. der Mischstrom über die Mischleitung geringer wird und damit die Last-Eingangstemperatur $T_L$ ansteigt. Dies wird dann den Temperaturregler 24 dazu veranlassen, den Versorgungsstrom qs wieder zu verkleinern, um die Temperatur zu senken. Auf diese Weise wird somit indirekt auch der Versorgungsstrom qs durch die Begrenzung der Drehzahl n der Lastpumpe 20 reduziert.

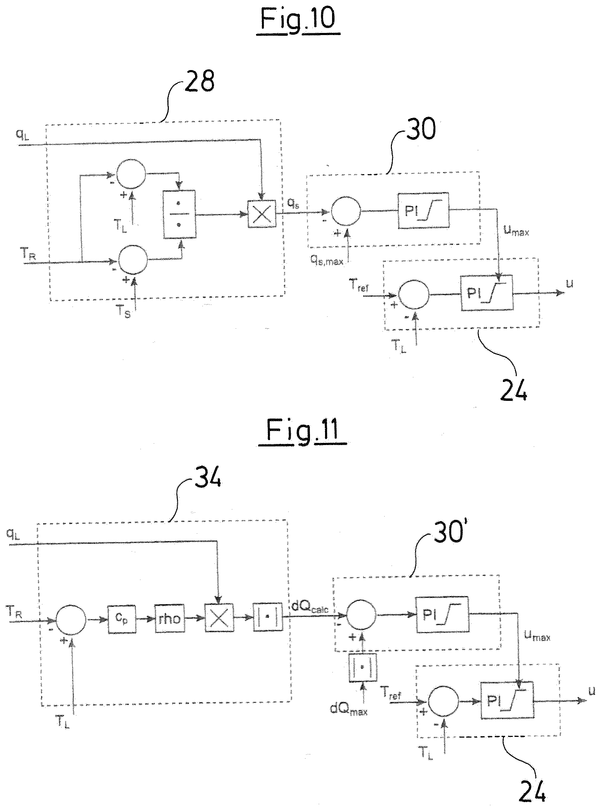

Anstatt, wie oben anhand der Figuren 2, 3, 6, 7 und 8 beschrieben, die Stellgröße eines Druckreglers 32 über einen Begrenzungsregler 30 vorzugeben, könnte auch die Stellgröße des Temperaturreglers 24 in gleicher Weise beeinflusst werden, wie anhand der Figuren 10 - 13 erläutert wird.

Fig. 10 zeigt das Versorgungsstrom-Bestimmungsmodul 28, wie es anhand von Fig. 2 erläutert wurde. Ausgangsseitig ist darüber hinaus ein Begrenzungsregler 30 angeordnet, wie er anhand von Fig. 2 beschrieben wurde und den Versorgungsstrom qs auf einen maximalen Versorgungsstrom $q_{S,max}$ begrenzt. Im Unterschied zu dem Ausführungsbeispiel gemäß Fig. 2 gibt der Begrenzungsregler 30 hier als Stellgröße keine maximale Drehzahl, sondern eine maximale Stellgröße $u_{max}$ aus, welche an den Temperaturregler 24 übergeben wird. Der Temperaturregler 24 dient dazu, die Last-Eingangstemperatur auf eine Solltemperatur $T_{ref}$ zu regeln. Er gibt dazu eine Stellgröße u aus, welche den Ventilöffnungsgrad des Ventils 22, 22' oder die Drehzahl der Versorgungspumpe qs repräsentiert. Dies bedeutet, dass der Temperaturregler 24 die Stellgröße u auf die von dem Begrenzungsregler 30 vorgegebene maximale Stellgröße $u_{max}$ begrenzt, sodass bei entsprechender Einstellung des Mischventils 22, 22' oder der Versorgungspumpe 46 so indirekt der Versorgungsstrom qs begrenzt wird.

Fig. 11 zeigt eine Regleranordnung, welche der Regleranordnung gemäß Fig. 3 entspricht, nur dass hier ebenfalls der Druckregler 32 durch den Temperaturregler 24 ersetzt ist. Der oben anhand von Fig. 3 beschriebene Begrenzungsregler 30', wie vorangehend anhand von Fig. 10 beschrieben, gibt keine maximale Drehzahl, sondern eine maximale Stellgröße $u_{max}$ aus, über welche in dem Temperaturregler 24 in der beschriebenen Weise die Stellgröße u auf diesen Maximalwert $u_{max}$ begrenzt wird.

Fig. 12 zeigt eine Regleranordnung, welche der Regleranordnung entspricht, welche anhand von Fig. 6 beschrieben wurde, mit dem Unterschied, dass auch hier der Druckregler 32 durch den Druckregler 24 ersetzt ist, welche von dem Begrenzungsregler 30" als begrenzende Stellgröße eine maximale Stellgröße $u_{max}$ zugeführt wird. Der Temperaturregler 24 begrenzt somit die ausgegebene Stellgröße u auf diesen Wert.

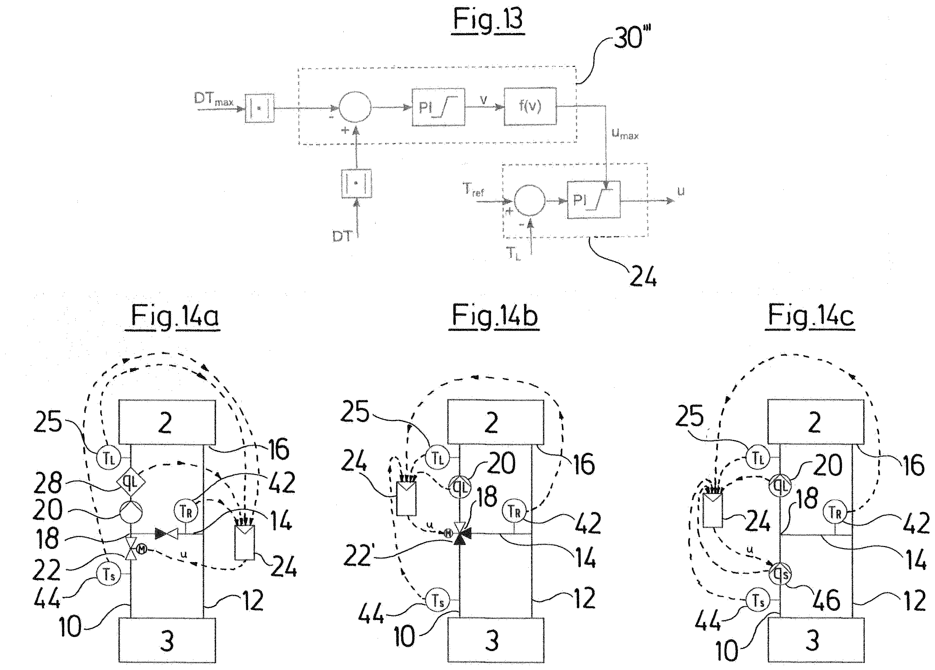

Fig. 13 zeigt eine Regleranordnung, welche der anhand von Fig. 7 beschriebenen Regleranordnung entspricht, mit dem Unterschied, dass auch hier der Druckregler 32 durch den Temperaturregler 24 ersetzt ist, welchem von dem Begrenzungsregler 30''' eine maximale Stellgröße $u_{max}$ zugeführt wird, wie oben anhand der Figuren 10 - 12 beschrieben wurde.

Hinsichtlich der Regleranordnungen, welche in den Figuren 10, 11, 12 und 13 gezeigt sind und vorangehend beschrieben wurden, ist zu verstehen, dass auch diese in der Weise, wie es anhand von Fig. 8 beschrieben wurde, miteinander kombiniert werden könnten. Dann ist ebenfalls ein Auswahlregler vorgesehen, welcher aus drei maximalen Stellgrößen $u_{max1}$, $u_{max2}$ und $u_{max3}$ in der anhand von Fig. 8 beschriebenen Weise die größte oder kleinste Stellgröße auswählt und an den Temperaturregler 24 übergibt.

Die Figuren 14a - 14c zeigen nun ähnlich wie die Figuren 9a - 9c drei Ausführungsbeispiele eines Teils eines Wärmeübertragungssystems zur Verwirklichung der Regelprinzipien, welche anhand von Figuren 10 - 13 beschrieben sind. Dabei entspricht die Ausgestaltung gemäß Fig. 14a grundsätzlich der Anordnung gemäß Fig. 9a, die Ausgestaltung gemäß Fig. 14b der Ausgestaltung gemäß Fig. 9b und die Ausgestaltung gemäß Fig. 14c der Ausgestaltung gemäß Fig. 9c. Dies betrifft insbesondere die Anordnung der Mischventile 22 und 22' sowie der Versorgungspumpe 46 sowie der Temperatursensoren und des Strömungssensors 38. Insofern wird auf die Beschreibung gemäß Figuren 9a - 9c verwiesen. Auch hinsichtlich der Anordnungen, welche in Figuren 14a - 14c gezeigt sind, ist zu verstehen, dass in einem Wärmeübertragungssystem vorzugsweise mehrere solcher Anordnungen von Lastkreisen 2 mit zugehörigen Mischeinrichtungen angeordnet sind.

Im Unterschied zu den Ausgestaltungen gemäß Fig. 9a - 9c sind die Anordnungen gemäß Fig. 14a - 14c dazu ausgestaltet, das Regel- bzw. Begrenzungsverfahren, wie es anhand von Figuren 10 - 13 erläutert wurde, umzusetzen. D. h. hier ist kein Regelmodul 40 vorgesehen, sondern die Begrenzung wird von dem Temperaturregler 24 in der anhand der Figuren 10 - 13 beschriebenen Weise vorgenommen. Dabei können die Regelprinzipien gemäß Figuren 10 - 13 jeweils einzeln oder in Kombination verwirklicht werden, beispielsweise in Form eines kombinierten Reglers entsprechend der Anordnung in Fig. 8.

Im Übrigen ist zu verstehen, dass das erfindungsgemäße Regelprinzip auch bei Wärmeübertragungssystemen, welche statt einer Mischeinrichtung einen Wärmetauscher verwenden, eingesetzt werden könnte. Bei solchen Systemen wäre anstelle der Mischleitung 14 ein Wärmetauscher vorgesehen, wobei durch einen ersten Strömungsweg des Wärmetauschers der Versorgungsstrom qs über die Versorgungsleitung 10 und die Rücklaufleitung 12 strömt und durch einen zweiten Strömungsweg der Laststrom $q_L$ durch den Lastkreis 2. Bei solch einer Anordnung wäre vorzugsweise sowohl eine Lastpumpe 20 im Lastkreis als auch eine Versorgungspumpe 46 in dem Versorgungskreis vorgesehen.

Besonders bevorzugt sind die erforderlichen Regelungskomponenten, insbesondere das Regelmodul 40 und/oder der Temperaturregler 24 vorzugsweise in das die Lastpumpe 20 bildende Pumpenaggregat, insbesondere in einen Klemmenkasten oder Elektronikgehäuse dieses Pumpenaggregates integriert.


**Bezugszeichenliste**

| | |
|---|---|
| 2 | Lastkreise |
| 3 | Versorgung |
| 4 | Wärmequelle |
| 6 | Hinlauf |
| 8 | Rücklauf |
| 10 | Versorgungsleitungen |
| 12 | Rücklaufleitungen |
| 14 | Mischleitung |
| 16 | Ausgang |
| 18 | Mischpunkt |
| 20 | Lastpumpe |
| 22, 22' | Mischventil |
| 24 | Temperaturregler |
| 26 | Ausgleichsventile |
| 28 | Versorgungsstrom-Bestimmungsmodul |
| 30, 30', 30", 30''' | Begrenzungsregler |
| 32 | Druckregler |
| 34 | Wärmestrom-Bestimmungsmodul |
| 36 | Auswahlregler |
| 38 | Strömungssensor |
| 40 | Regelmodul |
| 42,44 | Temperatursensoren |

| 46 | Versorgungspumpe |
| $c_p$ | spezifische Wärmekapazität des Wärmeträgers |
| $q_L$ | Laststrom |
| qs | Versorgungsstrom |
| $q_{S,max}$ | maximaler Versorgungsstrom |
| n | Drehzahl |
| $n_{max}$ | Maximaldrehzahl |
| $T_R$ | Lastausgangstemperatur |
| Ts | Versorgungstemperatur |
| $T_R$ | Last-Ausgangstemperatur, Sollwert |
| $T_L$ | Last-Eingangstemperatur |
| Dq | Wärmestrom |
| $dQ_{calc}$ | berechneter Wärmestrom |
| $dQ_{max}$ | maximaler Wärmestrom |
| rho | Dichte des Wärmeträgers |
| $T_{ref}$ | Soll-Lasteingangstemperatur |
| u | Stellgröße |
| $u_{max}$ | maximale Stellgröße |
| $Dp_L$ | Differenzdruck über der Lastpumpe |
| $Dp_{set}$ | Sollwert für den Differenzdruck über der Lastpumpe |
| DT | Temperaturdifferenz über dem Lastkreis |
| $DT_{max}$ | maximale Temperaturdifferenz |

**Patentansprüche**

1. Verfahren zum Begrenzen eines Versorgungsstromes (qs) in einem Wärmeübertragungssystem, welches eine Versorgungsleitung (10) mit einem Versorgungsstrom (qs) und einer Versorgungs-Eingangstemperatur (Ts) und zumindest einen Lastkreis (2) mit einer Lastpumpe (20) aufweist, welche einen Laststrom ($q_L$) durch den zumindest einen Lastkreis (2) mit einer Last-Eingangs- ($T_L$) und einer Last-Ausgangstemperatur ($T_R$) erzeugt, wobei die Last-Eingangstemperatur ($T_L$) durch Veränderung des Versorgungsstroms (qs) eingestellt wird, **dadurch gekennzeichnet, dass** der Versorgungsstrom (qs) zusätzlich zur Einstellung in Abhängigkeit der gewünschten Last-Eingangstemperatur ($T_L$) unter Berücksichtigung von zumindest einer in dem zumindest einen Lastkreis (2) erfassten Temperatur auf einen Maximalstrom ($q_{S,max}$) begrenzt wird, indem der Versorgungsstrom (qs) nicht direkt selber erfasst wird, sondern indirekt auf Grundlage der in dem zumindest einen Lastkreis (2) erfassten Temperatur bestimmt und mit einem gewünschten Maximalwert verglichen wird, sodass für jeden Lastkreis ein bestimmter maximaler Versorgungsstrom (qs) nicht überschritten wird.

2. Verfahren nach Anspruch 1, **dadurch gekennzeichnet, dass** das Wärmeübertragungssystem wenigstens einen Wärmetauscher zwischen der Versorgungsleitung (10) und dem Lastkreis (2) aufweist, und dass mittels einer Änderung des Durchflusses in der Versorgungsleitung (10) die Temperatur in dem Lastkreis (2) geändert wird.

3. Verfahren nach Anspruch 1 oder 2, **dadurch gekennzeichnet, dass** das Wärmeübertragungssystem wenigstens eine Mischeinrichtung (14, 18) aufweist, welche einen Last-Ausgangstrom ($q_L$) zumindest teilweise mit dem Versorgungsstrom (qs) mischt.

4. Verfahren nach einem der vorangehenden Ansprüche, **dadurch gekennzeichnet, dass** der Versorgungsstrom (qs) auf Basis des Laststromes ($q_L$) und eines oder mehrerer Temperatursignale eingestellt wird, welche in dem Wärmeübertragungssystem bestimmt werden, insbesondere auf Basis der Versorgungs-Eingangstemperatur (Ts), der Last-Eingangstemperatur ($T_L$) und der Last-Ausgangstemperatur ($T_R$).

5. Verfahren nach einem der vorangehenden Ansprüche, **dadurch gekennzeichnet, dass** der Versorgungsstrom (qs) indirekt durch wenigstens eine der folgenden Maßnahmen begrenzt wird:

  - Begrenzen des thermischen Leistungsflusses (dQ) in dem Lastkreis (2),
  - Begrenzen der Last-Ausgangstemperatur ($T_R$)
  - Begrenzen der Differenz (DT) zwischen der Last-Ausgangstemperatur ($T_R$) und der Last-Eingangstemperatur

$(T_L)$.

6. Verfahren nach einem der vorangehenden Ansprüche, **dadurch gekennzeichnet, dass** für zumindest zwei Eingangsvariablen jeweils ein maximaler Versorgungstrom (qs) oder eine zu dem maximalen Versorgungsstrom (qs) monoton in Beziehung stehende Variable (n; u) auf Grundlage einer der Eingangsvariablen bestimmt wird und anschließend einer der so bestimmten maximalen Versorgungsströme $(q_{S,max})$ zur Begrenzung des Versorgungsstromes (qs) ausgewählt wird.

7. Verfahren nach einem der vorangehenden Ansprüche, **dadurch gekennzeichnet, dass** der Versorgungsstrom (qs) durch Begrenzen der Drehzahl (n) der Lastpumpe (20) und/oder der Drehzahl (n) einer Versorgungspumpe (46) und/oder durch Begrenzen eines Öffnungsgrades (u) eines Ventiles (22; 22') begrenzt wird.

8. Verfahren nach einem der vorangehenden Ansprüche, **dadurch gekennzeichnet, dass** der Versorgungsstrom (qs) durch Begrenzung einer Stellgröße (n; u) eines Druck- oder Temperaturreglers (32, 24) begrenzt wird.

9. Verfahren nach einem der vorangehenden Ansprüche, **dadurch gekennzeichnet, dass** der Versorgungsstrom (qs) durch Begrenzen einer Stellgröße (n, u) eines Regelkreises begrenzt wird, welcher eine Lasttemperatur und/oder einen Lastdruck in dem Lastkreis (2), insbesondere einen Differenzdruck (Dp) über der Lastpumpe (20) regelt.

10. Wärmeübertragungssystem mit

einer Versorgungsleitung (10) zur Anbindung an eine Fluidversorgung (6) und einer Rücklaufleitung (12) zur Anbindung an einen Fluidrücklauf (8),
und zumindest einem Lastkreis (2) mit einer in diesem angeordneten Lastpumpe (20), welche einen Laststrom $(q_L)$ durch den zumindest einen Lastkreis (2) erzeugt, einer Durchflussregeleinrichtung (24) zum Regeln eines Versorgungsstromes (qs) in der Versorgungsleitung (10), wobei die Durchflussregeleinrichtung (24) derart ausgebildet ist, dass sie eine Last-Eingangstemperatur $(T_L)$ am Eingang des zumindest einen Lastkreises (2) durch Regulierung des Versorgungsstromes (qs) regelt, **gekennzeichnet durch**
zumindest einen Temperatursensor in dem zumindest einen Lastkreis (2) und wenigstens einen Begrenzungsregler (30), welcher derart ausgebildet ist, dass er den Versorgungsstrom (qs) direkt oder indirekt auf ein vorbestimmtes Maximum in Abhängigkeit zumindest eines Temperatursignals von dem zumindest einen Temperatursensor begrenzt, indem der Versorgungsstrom (qs) indirekt bestimmt wird und so begrenzt wird, dass der Versorgungsstrom (qs) zu einem einzelnen Lastkreis (2) einen voreingestellten Maximalwert nicht überschreitet.

11. Wärmeübertragungssystem nach Anspruch 11, **gekennzeichnet durch** einen Wärmetauscher zwischen der Versorgungsleitung (10) und dem Lastkreis (2) oder eine Mischleitung (14), welche den Ausgang (16) des Lastkreises (2) mit der Versorgungsleitung (10) an einem Mischpunkt (18) verbindet.

12. Wärmeübertragungssystem nach Anspruch 10 oder 11, **gekennzeichnet durch** einen Druck- (32) und/oder Temperaturregler (24) für den Lastkreis (2), wobei dieser Regler (32, 24) mit dem Begrenzungsregler (30) derart gekoppelt ist, dass eine Stellgröße (n, u) in dem Druck- (32) und/oder Temperaturregler (24) durch den Begrenzungsregler (30) auf einen Maximalwert $(n_{max}, u_{max})$ begrenzt werden kann.

13. Wärmeübertragungssystem nach einem der Ansprüche 10 bis 12, **dadurch gekennzeichnet, dass** der Begrenzungsregler (30) derart ausgebildet ist, dass er einen thermischen Leistungsfluss (dQ) in dem Lastkreis (2) und/oder die Last-Ausgangstemperatur $(T_R)$ und/oder eine Differenz (DT) zwischen der Last-Ausgangs- $(T_R)$ und der Last-Eingangstemperatur $(T_L)$ mit einem zugehörigen Grenzwert vergleicht und ein Maximum für eine Variable (n, u) zur Einstellung des Versorgungsstromes (qs) definiert.

14. Wärmeübertragungssystem nach einem der Ansprüche 10 bis 13, **dadurch gekennzeichnet, dass** der wenigstens eine Temperatursensor ein Temperatursensor (25), welcher an dem Eingang des Lastkreises (2) angeordnet ist und eine Last-Eingangstemperatur $(T_L)$ erfasst, oder ein Temperatursensor ist, welcher an dem Ausgang (16) des Lastkreises (2) angeordnet ist und eine Last-Ausgangstemperatur $(T_R)$ erfasst.

15. Wärmeübertragungssystem nach einem der Ansprüche 10 bis 14, **dadurch gekennzeichnet, dass** die Durchflussregeleinrichtung zumindest eine den Versorgungsstrom (qs) regelnde Versorgungspumpe (46) und/oder ein den Versorgungsstrom (qs) regelndes Versorgungsventil (22, 22') aufweist.

16. Wärmeübertragungssystem nach einem der Ansprüche 10 bis 15, **dadurch gekennzeichnet, dass** die Lastpumpe (20) zum Erfassen eines Durchflusses ($q_L$) durch den Lastkreis (2) ausgebildet ist und vorzugsweise mit der Durchflussregeleinrichtung zur Übertragung eines zu dem erfassten Durchfluss ($q_L$) korrespondierenden Signals verbunden ist.

17. Wärmeübertragungssystem nach einem der Ansprüche 10 bis 16, **dadurch gekennzeichnet, dass** die Durchflussregeleinrichtung (24, 32) und/oder der Begrenzungsregler (30) in ein die Lastpumpe (20) bildendes Lastpumpenaggregat integriert sind.

**Claims**

1. A method for limiting a supply flow (qS) in a heat transfer system, which has a supply line (10) with a supply flow (qS) and a supply-inlet temperature (TS) and at least one load circuit (2) with a load pump (20), which generates a load flow (qL) through the at least one load circuit (2) with a load-inlet (TL) and a load-outlet temperature (TR), the load-inlet temperature (TL) being adjusted by changing the supply flow (qS),
   **characterized in that**
   in addition to adjustment as a function of the desired load-inlet temperature (TL) taking account of at least one temperature detected in the at least one load circuit (2), the supply flow (qS) is limited to a maximum flow (qS,max), **in that** the supply flow (qS) is not itself detected directly, but rather is determined indirectly on the basis of the temperature detected in the at least one load circuit (2) and is compared with a desired maximum value, so that a certain maximum supply flow (qS) is not exceeded for each load circuit.

2. The method according to Claim 1, **characterized in that** the heat transfer system has at least one heat exchanger between the supply line (10) and the load circuit (2), and **in that** the temperature in the load circuit (2) is changed by means of a change of the flow in the supply line (10).

3. The method according to Claim 1 or 2, **characterized in that** the heat transfer system has at least one mixing device (14, 18), which mixes a load outlet flow (qL) at least partially with the supply flow (qS).

4. The method according to one of the preceding claims, **characterized in that** the supply flow (qS) is adjusted on the basis of the load flow (qL) and one or more temperature signals, which are determined in the heat transfer system, particularly on the basis of the supply-inlet temperature (TS), the load-inlet temperature (TL) and the load-outlet temperature (TR).

5. The method according to one of the preceding claims, **characterized in that** the supply flow (qS) is limited indirectly by at least one of the following measures:

   - limiting the thermal power flow (dQ) in the load circuit (2),
   - limiting the load outlet temperature (TR)
   - limiting the difference (DT) between the load-outlet temperature (TR) and the load-inlet temperature (TL).

6. The method according to one of the preceding claims, **characterized in that** for at least two input variables in each case one maximum supply flow (qS) or one variable (n; u), which is monotonically related to the maximum supply flow (qS), is determined on the basis of one of the input variables and subsequently one of the thus determined maximum supply flows (qS,max) is selected for limiting the supply flow (qS).

7. The method according to one of the preceding claims, **characterized in that** the supply flow (qS) is limited by limiting the rotational speed (n) of the load pump (20) and/or the rotational speed (n) of a supply pump (46) and/or by limiting an opening level (u) of a valve (22; 22').

8. The method according to one of the preceding claims, **characterized in that** the supply flow (qS) is limited by limiting a manipulated variable (n; u) of a pressure or temperature controller (32, 24).

9. The method according to one of the preceding claims, **characterized in that** the supply flow (qS) is limited by limiting a manipulated variable (n, u) of a control loop, which controls a load temperature and/or a load pressure in the load circuit (2), particularly a differential pressure (Dp), by means of the load pump (20).

**10.** A heat transfer system having

a supply line (10) for connection to a fluid supply (6) and a return line (12) for connection to a fluid return (8), and at least one load circuit (2) with a load pump (20) arranged in the same, which generates a load flow ($q_L$) through the at least one load circuit (2),
a flow control device (24) for controlling a supply flow (qS) in the supply line (10), the flow control device (24) being constructed in such a manner that it controls a load-inlet temperature (TL) at the inlet of the at least one load circuit (2) by controlling the supply flow (qS),
**characterized by**
at least one temperature sensor in the at least one load circuit (2) and at least one limiting controller (30), which is constructed in such a manner that it limits the supply flow (qS) directly or indirectly to a predetermined maximum as a function of at least one temperature signal of the at least one temperature sensor, in that the supply flow (qS) is determined indirectly and is limited such that the supply flow (qS) for an individual load circuit (2) does not exceed a preset maximum value.

**11.** The heat transfer system according to Claim 11, **characterized by** a heat exchanger between the supply line (10) and the load circuit (2) or a mixing line (14), which connects the outlet (16) of the load circuit (2) to the supply line (10) at a mixing point (18).

**12.** The heat transfer system according to Claim 10 or 11, **characterized by** a pressure (32) and/or temperature controller (24) for the load circuit (2), wherein this controller (32, 24) is coupled to the limiting controller (30) in such a manner that a manipulated variable (n, u) in the pressure (32) and/or temperature controller (24) can be limited to a maximum value (nmax, umax) by the limiting controller (30).

**13.** The heat transfer system according to one of Claims 10 to 12, **characterized in that** the limiting controller (30) is designed in such a manner that it compares a thermal power flow (dQ) in the load circuit (2) and/or the load-outlet temperature (TR) and/or a difference (DT) between the load-outlet (TR) and the load inlet-temperature (TL) with an associated limit value and defines a maximum for a variable (n, u) for adjusting the supply flow (qS).

**14.** The heat transfer system according to one of Claims 10 to 13, **characterized in that** the at least one temperature sensor is a temperature sensor (25), which is arranged at the inlet of the load circuit (2) and detects a load-inlet temperature (TL), or a temperature sensor, which is arranged at the outlet (16) of the load circuit (2) and detects a load-outlet temperature (TR).

**15.** The heat transfer system according to one of Claims 10 to 14, **characterized in that** the flow control device has at least one supply pump (46) controlling the supply flow (qS) and/or a supply valve (22, 22') controlling the supply flow (qS).

**16.** The heat transfer system according to one of Claims 10 to 15, **characterized in that** the load pump (20) is designed for detecting a flow (qL) through the load circuit (2) and is preferably connected to the flow control device for transmitting a signal corresponding to the detected flow (qL).

**17.** The heat transfer system according to one of Claims 10 to 16, **characterized in that** the flow control device (24, 32) and/or the limiting controller (30) are integrated into a load pump assembly forming the load pump (20).

**Revendications**

**1.** Procédé de limitation du débit d'alimentation (qS) dans un système de transmission de chaleur qui comprend un conduit d'alimentation (10) avec un débit d'alimentation (qS) et une température d'alimentation d'entrée (TS) et au moins un circuit de charge (2) avec une pompe de charge (20) qui produit un débit de charge (qL) passant par ledit au moins un circuit de charge (2) avec une température d'entrée de charge (TL) et une température de sortie de charge (TR), la température d'entrée de charge (TL) étant réglée par un changement du débit d'alimentation (qS),
**caractérisé en ce que**
le débit d'alimentation (qS) est limité, outre pour le réglage en fonction de la température d'entrée de charge (TL) souhaitée, à un débit maximal (qS,max) en tenant compte d'au moins une température mesurée dans ledit au moins un circuit de charge (2), en ne pas mesurant le débit d'alimentation (qS) directement lui-même, mais en le déterminant de façon indirecte sur la base de la température mesurée dans ledit au moins un circuit de charge (2) et en le comparant avec une valeur maximale souhaitée, si bien que, pour chaque circuit de charge, un débit d'alimentation (qS) maximal déterminé ne soit pas dépassé.

2. Procédé selon la revendication 1, **caractérisé en ce que** le système de transmission de chaleur comprend au moins un échangeur thermique entre le conduit d'alimentation (10) et le circuit de charge (2), et que la température dans le circuit de charge (2) est modifié au moyen d'un changement du débit dans le conduit d'alimentation (10).

3. Procédé selon la revendication 1 ou 2, **caractérisé en ce que** le système de transmission de chaleur comprend au moins un dispositif mélangeur (14, 18) qui mélange, au moins en partie, un débit de charge de sortie (qL) avec le débit d'alimentation (qS).

4. Procédé selon l'une des revendications précédentes, **caractérisé en ce que** le débit d'alimentation (qS) est réglé sur la base du débit de charge (qL) et d'un ou de plusieurs signaux de température qui sont déterminés dans le système de transmission de chaleur, notamment sur la base de la température d'entrée d'alimentation (TS), de la température d'entrée de charge (TL) et de la température de sortie de charge (TR).

5. Procédé selon l'une des revendications précédentes, **caractérisé en ce que** le débit d'alimentation (qS) est indirectement limité par au moins une des mesures suivantes :

   - limitation du circuit de puissance (dQ) thermique dans le circuit de charge (2),
   - limitation de la température de sortie de charge (TR),
   - limitation de la différence (DT) entre la température de sortie de charge (TR) et la température d'entrée de charge (TL).

6. Procédé selon l'une des revendications précédentes, **caractérisé en ce que**, pour au moins deux variables d'entrées, un débit d'alimentation maximal (qS) ou une variable (n ; u) se trouvant en rapport monotone par rapport au débit maximal d'alimentation (qS) est déterminé sur la base d'une des variables d'entrée et que, ensuite, un des débits d'alimentation (qS,max) maximaux ainsi déterminés est choisi pour limiter le débit d'alimentation (qS).

7. Procédé selon l'une des revendications précédentes, **caractérisé en ce que** le débit d'alimentation (qS) est limité par la limitation de la vitesse de rotation (n) de la pompe de charge (20) et/ou la vitesse de rotation d'une pompe d'alimentation (46) et/ou par la limitation du degré d'ouverture (u) d'une vanne (22 ; 22')

8. Procédé selon l'une des revendications précédentes, **caractérisé en ce que** le débit d'alimentation (qS) est limité par la limitation d'une variable de réglage (n ; u) d'un régulateur de pression ou de température (32, 24).

9. Procédé selon l'une des revendications précédentes, **caractérisé en ce que** le débit d'alimentation (qS) est limité par une limitation d'une variante de réglage (n ; u) d'une boucle de réglage qui régule une température de charge et/ou une pression de charge dans le circuit de charge (2) notamment une pression différentielle (Dp) à la pompe de charge (20).

10. Système de transmission de chaleur comprenant

   un conduit d'alimentation (10) destiné au raccordement à une alimentation en fluide (6) et un conduit de retour (12) pour un raccordement à un retour de fluide (8),
   et au moins un circuit de charge (2) avec une pompe de charge (20) installée dans ce dernier, qui engendre un débit de charge (qL) passant par ledit au moins un circuit de charge (2), un dispositif de régulation de débit (24) pour réguler un débit d'alimentation (qS) dans le conduit d'alimentation (10), le dispositif de régulation de débit (24) étant conçu de façon qu'il régule une température d'entrée de charge (TL) à l'entrée dudit au moins un circuit de charge (2) par une régulation du débit d'alimentation (qS),
   **caractérisé par**
   au moins un capteur de température dans ledit au moins un circuit de charge (2) et au moins un régulateur de limitation (30) qui est conçu de façon qu'il limite le débit d'alimentation (qS) directement ou indirectement à un maximum prédéterminé en fonction d'au moins un signal de température provenant dudit au moins un capteur de température, en déterminant le débit d'alimentation (qS) indirectement et en le limitant de façon que le débit d'alimentation (qS) vers un circuit de charge (2) individuel ne dépasse pas une valeur maximale préréglée.

11. Système de transmission de chaleur selon la revendication 11, **caractérisé par** un échangeur de chaleur entre le conduit d'alimentation (10) et le circuit de charge (2) ou par un conduit de mélange (14) qui relie la sortie (16) du circuit de charge (2) au conduit d'alimentation (10) à un point de mélange (18).

12. Système de transmission de chaleur selon l'une des revendications 10 ou 11, **caractérisé par** un régulateur de pression (32) et/ou de température (24) pour le circuit de charge (2), ce régulateur (32, 24) étant accouplé au régulateur de limitation (30) de manière telle qu'une variante de réglage (n, u) puisse être limitée par le régulateur de limitation (30) à une valeur maximale (nmax, umax), dans le régulateur de pression (32) et/ou de température (24).

13. Système de transmission de chaleur selon l'une des revendications 10 à 12, **caractérisé en ce que** le régulateur de limitation (30) est formé de manière telle qu'il compare un débit de puissance thermique (dQ) dans le circuit de charge (2) et/ou la température de sortie de charge (TR) et/ou une différence (DT) entre la température de sortie de charge (TR) et la température d'entrée de charge (TL), avec la valeur limite correspondante, et qu'il définisse un maximum pour une variable (n, u) pour le réglage du débit d'alimentation (qS).

14. Système de transmission de chaleur selon l'une des revendications 10 à 13, **caractérisé en ce que** ledit au moins un capteur de température est un capteur de température (25) qui est placé à l'entrée du circuit de charge (2) et saisit une température d'entrée de charge (TL), ou est un capteur de température qui est placé à la sortie (16) du circuit de charge (2) et saisit une température de sortie de charge (TR).

15. Système de transmission de chaleur selon l'une des revendications 10 à 14, **caractérisé en ce que** le dispositif de régulation de débit comprend au moins une pompe d'alimentation (46) régulant le débit d'alimentation (qS) et/ou une vanne d'alimentation (22, 22') régulant le débit d'alimentation (qS).

16. Système de transmission de chaleur selon l'une des revendications 10 à 15, **caractérisé en ce que** la pompe de charge (20) est formée pour capter un débit (qL) passant par le circuit de charge (2) et est de préférence relié au dispositif de régulation de débit pour la transmission d'un signal correspondant au débit (qL) capté.

17. Système de transmission de chaleur selon l'une des revendications 10 à 16, **caractérisé en ce que** le dispositif de régulation de débit (24, 32) et/ou le régulateur de limitation (30) sont intégrés dans un groupe motopompe de charge formant la pompe de charge (20).

EP 2 960 587 B1

## Fig.1

## Fig.2

## Fig.3

## Fig.4

## Fig.5a

## Fig.5b

## Fig.6

## Fig.7

# Fig.8

Fig.9c

Fig.9b

Fig.9a

Fig.12

EP 2 960 587 B1

## Fig.10

## Fig.11

EP 2 960 587 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0892223 A1